# EUROPEAN PATENT SPECIFICATION

(11) **EP 4 633 091 B1**
(45) Date of publication and mention of the grant of the patent: **25.11.2026**
(21) Application number: 25171863.1
(22) Date of filing: 19.08.2021
(51) Int. Cl.: H04M 1/72454, H04L 51/18, H04M 1/72469, H04L 12/28, H04L 51/52, H04L 51/02, G06F 9/451, G08B 21/24, H04L 51/04, H04M 1/7243

(54) **DEVICE CONTROL METHOD, ELECTRONIC DEVICE, AND SYSTEM**
VERFAHREN ZUR STEUERUNG EINER VORRICHTUNG, ELEKTRONISCHE VORRICHTUNG UND SYSTEM
PROCÉDÉ DE COMMANDE DE DISPOSITIF, DISPOSITIF ÉLECTRONIQUE ET SYSTÈME

(30) Priority: 09.09.2020 CN 202010939859
(43) Date of publication of application: 15.10.2025
(62) Document number(s) of the earlier application(s) in accordance with Art. 76 EPC: 21865823.5 / 4 202 618
(73) Proprietor: Huawei Technologies Co., Ltd., Shenzhen, Guangdong 518129 (CN)
(72) Inventor: WANG, Zongwei, Shenzhen 518129 (CN); WANG, Long, Shenzhen 518129 (CN); DU, Zhong, Shenzhen 518129 (CN)
(74) Representative: Körber, Martin Hans

(56) References cited:
- CN-A- 111 479 007
- US-A1- 2014 359 018
- US-A1- 2016 330 297
- US-A1- 2020 099 635

## Description

### TECHNICAL FIELD

This application relates to the field of terminals, and more specifically, to a device control system.

### BACKGROUND

Currently, more people use smart assistants in devices, and a user can conveniently control a smart device of the user by using a smart assistant (for example, Siri of Apple, Celia of Huawei, and Xiaoai of Xiaomi). However, currently, the user can invoke the smart assistant in only a fixed interface, for example, performing human-computer interaction after pressing and holding a power button to wake up the device. If the user does not perform special settings, the user can use only a voice to interact with the device. In this case, efficiency in delivering an instruction by the user to the device is relatively low.

US 2014/359018 discloses technology for controlling peripheral devices via a social networking platform.

### SUMMARY

This application provides a device control system, to help improve efficiency in delivering an instruction by a user to a device. The present invention is defined by the enclosed claims. In the following description, embodiments which are not covered by the claims are to be considered as examples necessary for understanding the invention.

According to a first aspect, a system is provided. The system includes a first electronic device and a second electronic device, the first electronic device is configured to detect a preset operation of a user in a chat interface of an instant messaging application, and the first electronic device is further configured to display a list in the chat interface in response to the preset operation. The list includes device information of one or more devices, the one or more devices are associated with a first account, and the first account is a logged-in account on the instant messaging application. The first electronic device is further configured to: when detecting an operation that the user selects the second electronic device from the list and enters a first instruction for the second electronic device, send the first instruction to the second electronic device. The second electronic device is configured to execute the first instruction.
In this embodiment of this application, when the user needs to deliver an instruction to another device in a process of chatting with another user, the user needs only to perform a preset operation to select the second electronic device that needs to execute the instruction. In addition, an instruction for the second electronic device may be entered in the chat interface, and a mobile phone may send the corresponding instruction to the second electronic device, so that the second electronic device executes the instruction. This avoids a process in which the user returns to the vicinity of the second electronic device to deliver an instruction, and improves efficiency in delivering an instruction to the device by the user. In addition, the smart assistant of the device is humanized, and it is easier to control the smart assistant during a chat, thereby improving user experience.

It may be clearly understood by a person skilled in the art that, for the purpose of convenient and brief description, for a detailed working process of the foregoing system, apparatus, and unit, reference may be made to a corresponding process in the foregoing method embodiments, and details are not described again herein.

In several embodiments provided in this application, it should be understood that the disclosed system, apparatus, and method may be implemented in another manner. For example, the described apparatus embodiment is merely an example. For example, the unit division is merely logical function division and may be other division in actual implementation. For example, a plurality of units or components may be combined or integrated into another system, or some features may be ignored or may not be performed. In addition, the displayed or discussed mutual couplings or direct couplings or communication connections may be indirect couplings or communication connections through some interfaces, apparatuses or units, and may be implemented in electrical, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, function units in the embodiments of this application may be integrated into one processing unit, or each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The software product is stored in a storage medium, and includes several instructions for instructing a computer device (which may be a personal computer, a server, a network device, or the like) to perform all or some of the steps of the methods described in the embodiments of this application. The foregoing storage medium includes any medium that can store program code, for example, a USB flash drive, a removable hard disk, a read-only memory (Read-Only Memory, ROM), a random access memory (Random Access Memory, RAM), a magnetic disk, or an optical disc.

In some possible implementations, the first instruction may be text information or voice information entered by the user.

With reference to the first aspect, in some implementations of the first aspect, the first electronic device is further configured to: when detecting the operation that the user selects the second electronic device from the list, send a second instruction to the second electronic device, where the second instruction is used to wake up the second electronic device, or the second instruction is used to request to interact with the second electronic device by using the first electronic device.

In this embodiment of this application, when detecting an operation that the user selects the second electronic device, the first electronic device may send the second instruction to the second electronic device. In this way, the second electronic device may first perform a wake-up operation. After the second electronic device is woken up, the first instruction may continue to be sent to the second electronic device, so that the second electronic device executes the first instruction.

With reference to the first aspect, in some implementations of the first aspect, the chat interface includes a one-to-one chat interface of two members and a group chat interface of three or more members.

In some possible implementations, the chat interface may alternatively be another chat interface. For example, the chat interface may alternatively be a chat interface between the user and a smart assistant of the first electronic device; or the chat interface may alternatively be a chat interface between the user and a smart assistant in an application.

With reference to the first aspect, in some implementations of the first aspect, the list further includes member information.

In some possible implementations, if the chat interface is a group chat interface of three or more members, the list may include information about members in the group and device information of one or more devices.

With reference to the first aspect, in some implementations of the first aspect, the first interface is the group chat interface, and the first electronic device is specifically configured to: display a first chat interface of the instant messaging application; display, by the first electronic device, a second chat interface in response to detecting the preset operation in the first chat interface, where the second chat interface includes the list; and jump from the second chat interface to the first chat interface in response to an operation that the user selects the second electronic device from the list. The first electronic device obtains the first instruction entered by the user in the first chat interface.

In this embodiment of this application, if the chat interface is the group chat interface, when detecting the preset operation, the first electronic device may jump from the first chat interface to the second chat interface. When detecting an operation that the user selects the second electronic device from the list, the first electronic device may jump from the second chat interface to the first chat interface. This conforms to the user's usage habits in a group chat process.

In some possible implementations, if the chat interface is a group chat interface, when detecting the preset operation, the first electronic device may also display the list in the first chat interface.

With reference to the first aspect, in some implementations of the first aspect, the first electronic device is further configured to: when no instruction entered by the user is received within preset duration, or a third instruction entered by the user is received, send the third instruction to the second electronic device, where the third instruction is used to instruct to end interaction with the second electronic device; and receive reminder information sent by the second electronic device, where the reminder information is used to remind the user to perform the preset operation again when the user needs to interact with the second electronic device; and display the reminder information in the chat interface.

In this embodiment of this application, if the first electronic device does not receive, within the preset duration, an instruction that is entered by the user for the second electronic device, or receives an instruction that is entered by the user for ending interaction with the second electronic device, the first electronic device may instruct the second electronic device to end the interaction. The second electronic device may send reminder information to the first electronic device, and after sending the reminder information to the first electronic device, the second electronic device may enter a non-wake-up state, thereby helping reduce power consumption of the second electronic device. In addition, the first electronic device may display the reminder information in the chat interface. This helps the user know that the second electronic device has stopped interacting with the user.

In some possible implementations, the second electronic device is further configured to: when no instruction sent by the first electronic device is received within preset duration, send reminder information to the first electronic device, where the reminder information is used to remind the user to perform the preset operation again when the user needs to interact with the second electronic device. The first electronic device is further configured to display the reminder information in the chat interface.

In this embodiment of this application, if the second electronic device does not receive, within the preset duration, the instruction sent by the first electronic device, the second electronic device may send the reminder information to the first electronic device, so that the first electronic device may remind the user to perform the preset operation again when the user needs to interact with the second electronic device. After sending the reminder information to the first electronic device, the second electronic device may enter a non-wake-up state, thereby helping reduce power consumption of the second electronic device. In addition, the first electronic device may display the reminder information in the chat interface. This helps the user know that the second electronic device has stopped interacting with the user.

With reference to the first aspect, in some implementations of the first aspect, the first electronic device is further configured to: receive a result of executing the first instruction by the second electronic device; and display the execution result in the chat interface.

In this embodiment of this application, after receiving the result of executing the first instruction by the second electronic device, the first electronic device may display the corresponding execution result in the chat interface. In this way, the user can view, in a timely manner, the result of executing the first instruction by the second electronic device.

With reference to the first aspect, the one or more devices include a device that has an intelligence capability and that is under the first account.

With reference to the first aspect, the one or more devices include a device that has an intelligence capability and that is authorized, by using the second account, to the first account for use.

In this embodiment of this application, in addition to delivering an instruction to a device of the user in the chat interface, the user may further deliver an instruction to a device authorized by another user to the user. In this way, it can be convenient for the user to control the device of the another user.

In some possible implementations, the one or more devices are online devices that have an intelligence capability.

With reference to the first aspect, the second account includes an account of a chat object of a user corresponding to the first account in the chat interface.

In this embodiment of this application, in a process of chatting with the chat object, the user may deliver an instruction to the user device and the device of the chat object. For different chat objects, different device information may be displayed in the list. This helps protect device privacy of a user and a chat object, and also helps improve intelligence of an electronic device.

With reference to the first aspect, in some implementations of the first aspect, the preset operation is an operation of entering "@" by the user.

According to a second aspect, a device control method is provided. The method is applied to a first electronic device, and the method includes: The first electronic device displays a chat interface of an instant messaging application. The first electronic device displays a list in the chat interface in response to detecting a preset operation in the chat interface, where the list includes device information of one or more devices, and the one or more devices include a second electronic device. The first electronic device obtains a first instruction that is for the second electronic device and that is entered by a user in the chat interface; and the first electronic device sends the first instruction to the second electronic device.

In this embodiment of this application, when the user needs to deliver an instruction to another device in a process of chatting with another user, the user needs only to perform a preset operation to select the second electronic device that needs to execute the instruction. In addition, an instruction for the second electronic device may be entered in the chat interface, and a mobile phone may send the corresponding instruction to the second electronic device, so that the second electronic device executes the instruction. This avoids a process in which the user returns to the vicinity of the second electronic device to deliver an instruction, and improves efficiency in delivering an instruction to the device by the user. In addition, the smart assistant of the device is humanized, and it is easier to control the smart assistant during a chat, thereby improving user experience.

In some possible implementations, the first instruction may be text information or voice information entered by the user.

With reference to the second aspect, in some implementations of the second aspect, before the obtaining a first instruction that is for the second electronic device and that is entered by a user in the chat interface, the method further includes: The first electronic device sends a second instruction to the second electronic device in response to detecting an operation that the user selects the second electronic device from the list, where the second instruction is used to wake up the second electronic device, or the second instruction is used to request to interact with the second electronic device by using the first electronic device.

In this embodiment of this application, when detecting an operation that the user selects the second electronic device, the first electronic device may send the second instruction to the second electronic device. In this way, the second electronic device may first perform a wake-up operation. After the second electronic device is woken up, the first instruction may continue to be sent to the second electronic device, so that the second electronic device executes the first instruction.

With reference to the second aspect, in some implementations of the second aspect, the chat interface includes a one-to-one chat interface of two members and a group chat interface of three or more members.

In some possible implementations, the chat interface may alternatively be another chat interface. For example, the chat interface may alternatively be a chat interface between the user and a smart assistant of the first electronic device; or the chat interface may alternatively be a chat interface between the user and a smart assistant in an application.

With reference to the second aspect, in some implementations of the second aspect, the list further includes member information.

In some possible implementations, if the chat interface is a group chat interface of three or more members, the list may include information about members in the group and device information of one or more devices.

With reference to the second aspect, in some implementations of the second aspect, the first interface is the group chat interface, and the displaying a chat interface of an instant messaging application includes: The first electronic device displays a first chat interface of the instant messaging application. The displaying a list in the chat interface in response to detecting a preset operation in the chat interface includes: The first electronic device displays a second chat interface in response to detecting the preset operation in the first chat interface, where the second chat interface includes the list. The obtaining a first instruction that is for the second electronic device and that is entered by a user in the chat interface includes: jumping from the second chat interface to the first chat interface in response to an operation that the user selects the second electronic device from the list; and obtaining, by the first electronic device, the first instruction entered by the user in the first chat interface.

In this embodiment of this application, if the chat interface is a group chat interface, when detecting the preset operation, the first electronic device may jump from the first chat interface to the second chat interface. When detecting an operation that the user selects the second electronic device from the list, the first electronic device may jump from the second chat interface to the first chat interface. This conforms to the user's usage habits in a group chat process.

In some possible implementations, if the chat interface is a group chat interface, when detecting the preset operation, the first electronic device may also display the list in the first chat interface.

With reference to the second aspect, in some implementations of the second aspect, the method further includes: When the first electronic device does not receive, within preset duration, an instruction entered by the user, or the first electronic device receives a third instruction entered by the user, the first electronic device sends the third instruction to the second electronic device, where the third instruction is used to instruct to end interaction with the second electronic device. The first electronic device receives reminder information sent by the second electronic device, where the reminder information is used to remind the user to perform the preset operation again when the user needs to interact with the second electronic device. The first electronic device displays the reminder information in the chat interface.

In this embodiment of this application, if the first electronic device does not receive, within the preset duration, an instruction that is entered by the user for the second electronic device, or receives an instruction that is entered by the user for ending interaction with the second electronic device, the first electronic device may instruct the second electronic device to end the interaction. The second electronic device may send reminder information to the first electronic device, and after sending the reminder information to the first electronic device, the second electronic device may enter a non-wake-up state, thereby helping reduce power consumption of the second electronic device. In addition, the first electronic device may display the reminder information in the chat interface. This helps the user know that the second electronic device has stopped interacting with the user.

With reference to the second aspect, in some implementations of the second aspect, the method further includes: The first electronic device receives a result of executing the first instruction by the second electronic device. The first electronic device displays the execution result in the chat interface.

In this embodiment of this application, after receiving the result of executing the first instruction by the second electronic device, the first electronic device may display the corresponding execution result in the chat interface. In this way, the user can view, in a timely manner, the result of executing the first instruction by the second electronic device.

With reference to the second aspect, in some implementations of the second aspect, the one or more devices include a device that has an intelligence capability and that is under a first account, and the first account is a logged-in account on the instant messaging application.

With reference to the second aspect, in some implementations of the second aspect, the one or more devices further include a device that has an intelligence capability and that is authorized, by using the second account, to the first account for use.

In this embodiment of this application, in addition to delivering an instruction to a device of the user in the chat interface, the user may further deliver an instruction to a device authorized by another user to the user. In this way, it can be convenient for the user to control the device of the another user.

In some possible implementations, the one or more devices are online devices that have an intelligence capability.

With reference to the second aspect, in some implementations of the second aspect, the second account includes an account of a chat object of a user corresponding to the first account in the chat interface.

In this embodiment of this application, in the process of chatting with the chat object, the user may deliver the instruction to the user device and the device of the chat object. For different chat objects, different device information may be displayed in the list. This helps protect device privacy of the user and the chat object, and also helps improve intelligence of the electronic device.

With reference to the second aspect, in some implementations of the second aspect, the preset operation is an operation of entering "@" by the user.

According to a third aspect, an apparatus for controlling a device is provided. The apparatus includes: a display unit, configured to display a chat interface of an instant messaging application; a detection unit, configured to detect a preset operation in the chat interface, where the display unit is further configured to display a list in the chat interface in response to the preset operation, where the list includes device information of one or more devices, and the one or more devices include a second electronic device; an obtaining unit, configured to obtain a first instruction that is for the second electronic device and that is entered by a user in the chat interface; and a sending unit, configured to send the first instruction to the second electronic device.

According to a fourth aspect, an electronic device is provided, including one or more processors, a memory, and one or more computer programs. The one or more computer programs are stored in the memory. The one or more computer programs include instructions. When the instructions are executed by the electronic device, the electronic device is enabled to perform the device control method in any possible implementation of the second aspect.

According to a fifth aspect, a computer program product including instructions is provided. When the computer program product is run on an electronic device, the electronic device is enabled to perform the device control method according to the second aspect.

According to a sixth aspect, a computer-readable storage medium is provided, including instructions. When the instructions are run on an electronic device, the electronic device is enabled to perform the device control method according to the second aspect.

According to a seventh aspect, a chip is provided, configured to execute instructions. When the chip runs, the chip performs the method for controlling a device according to the second aspect.

### BRIEF DESCRIPTION OF DRAWINGS

FIG. 1 is a schematic diagram of a hardware structure of an electronic device according to an embodiment of this application;
FIG. 2 is a block diagram of a software structure according to an embodiment of this application;
FIG. 3(a) to FIG. 3(j) show a set of graphical user interfaces according to an embodiment of this application;
FIG. 4(a) to FIG. 4(h) show another set of graphical user interfaces according to an embodiment of this application;
FIG. 5(a) to FIG. 5(c) show another set of graphical user interfaces according to an embodiment of this application;
FIG. 6(a) to FIG. 6(g) show another set of graphical user interfaces according to an embodiment of this application;
FIG. 7(a) to FIG. 7(e) show another set of graphical user interfaces according to an embodiment of this application;
FIG. 8(a) to FIG. 8(f) show another set of graphical user interfaces according to an embodiment of this application;
FIG. 9(a) to FIG. 9(d) show another set of graphical user interfaces according to an embodiment of this application;
FIG. 10(a) to FIG. 10(c) show another set of graphical user interfaces according to an embodiment of this application;
FIG. 11 shows another set of graphical user interfaces according to an embodiment of this application;
FIG. 12 shows another set of graphical user interfaces according to an embodiment of this application;
FIG. 13(a) to FIG. 13(h) show another set of graphical user interfaces according to an embodiment of this application;
FIG. 14(a) to FIG. 14(d) show another set of graphical user interfaces according to an embodiment of this application;
FIG. 15(a) to FIG. 15(e) show another set of graphical user interfaces according to an embodiment of this application;
FIG. 16 is a schematic flowchart of a method for controlling a device according to an embodiment of this application;
FIG. 17 is a schematic flowchart of determining a device in a list by a first electronic device according to an embodiment of this application; and
FIG. 18 is another schematic flowchart of a method for controlling a device according to an embodiment of this application.

### DESCRIPTION OF EMBODIMENTS

The following describes the technical solutions in embodiments of this application with reference to the accompanying drawings in the embodiments of this application. In the description of the embodiments of this application, unless otherwise specified, "/" indicates an "or" relationship. For example, A/B may represent A or B. "and/or" in this specification is merely an association relationship for describing associated objects, and represents that three relationships may exist. For example, A and/or B may represent the following three cases: Only A exists, both A and B exist, and only B exists. In addition, in the description of the embodiments of this application, "a plurality of" means two or more than two.

The terms "first" and "second" mentioned below are merely intended for a purpose of description, and shall not be understood as an indication or implication of relative importance or implicit indication of the number of indicated technical features. Therefore, a feature limited by "first " or "second" may explicitly indicate or implicitly include one or more such features. In the descriptions of the embodiments, unless otherwise specified, "a plurality of" means two or more.

A method provided in embodiments of this application may be applied to an electronic device such as a mobile phone, a tablet computer, a wearable device, an in-vehicle device, an augmented reality (augmented reality, AR) device/a virtual reality (virtual reality, VR) device, a notebook computer, an ultra-mobile personal computer (ultra-mobile personal computer, UMPC), a netbook, or a personal digital assistant (personal digital assistant, PDA). A specific type of the electronic device is not limited in embodiments of this application.

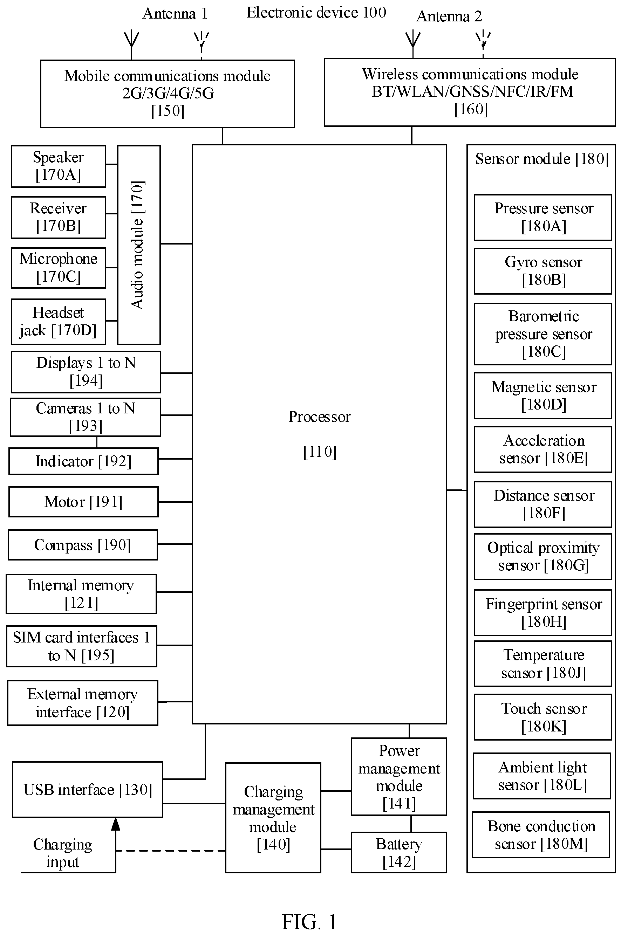

For example, FIG. 1 is a schematic diagram of a structure of an electronic device 100. The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communications module 150, a wireless communications module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a specific limitation on the electronic device 100. In some other embodiments of this application, the electronic device 100 may include more or fewer components than those shown in the figure, or combine some components, or split some components, or have a different component arrangement. The components shown in the figure may be implemented in hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent devices, or may be integrated into one or more processors.

The controller may be a nerve center and a command center of the electronic device 100. The controller may generate an operation control signal based on an instruction operation code and a time sequence signal, to complete control of instruction fetching and instruction execution.

A memory may be further disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor 110 may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a bidirectional synchronous serial bus, and includes one serial data line (serial data line, SDA) and one serial clock line (derail clock line, SCL). In some embodiments, the processor 110 may include a plurality of groups of I2C buses. The processor 110 may be separately coupled to the touch sensor 180K, a charger, a flashlight, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be used for audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communications module 160 through the I2S interface, to implement a function of answering a call by using a Bluetooth headset.

The PCM interface may also be used for audio communication, and analog signal sampling, quantization, and coding. In some embodiments, the audio module 170 may be coupled to the wireless communications module 160 through a PCM bus interface. In some embodiments, the audio module 170 may alternatively transmit an audio signal to the wireless communications module 160 through the PCM interface, to implement a function of answering a call through a Bluetooth headset. Both the I2S interface and the PCM interface may be used for audio communication.

The UART interface is a universal serial data bus, and is used for asynchronous communication. The bus may be a bidirectional communications bus. It converts to-be-transmitted data between serial communication and parallel communication. In some embodiments, the UART interface is usually used to connect the processor 110 to the wireless communications module 160. For example, the processor 110 communicates with a Bluetooth module in the wireless communications module 160 through the UART interface, to implement a Bluetooth function. In some embodiments, the audio module 170 may transmit an audio signal to the wireless communications module 160 through the UART interface, to implement a function of playing music by using a Bluetooth headset.

The MIPI interface may be configured to connect the processor 110 to a peripheral component such as the display 194 or the camera 193. The MIPI interface includes a camera serial interface (camera serial interface, CSI), a display serial interface (display serial interface, DSI), and the like. In some embodiments, the processor 110 communicates with the camera 193 through the CSI to implement a photographing function of the electronic device 100. The processor 110 communicates with the display 194 through the DSI interface to implement a display function of the electronic device 100.

The GPIO interface may be configured by software. The GPIO interface may be configured as a control signal or as a data signal. In some embodiments, the GPIO interface may be configured to connect the processor 110 to the camera 193, the display 194, the wireless communications module 160, the audio module 170, the sensor module 180, or the like. The GPIO interface may be further configured as the I2C interface, the I2S interface, the UART interface, the MIPI interface, or the like.

The USB interface 130 is an interface that conforms to a USB standard specification, and may be specifically a mini USB interface, a micro USB interface, a USB Type C interface, or the like. The USB interface 130 may be configured to connect to a charger to charge the electronic device 100, or may be configured to transmit data between the electronic device 100 and a peripheral device, or may be configured to connect to a headset, to play audio by using the headset. The port may be further configured to connect to another electronic device such as an AR device.

It may be understood that an interface connection relationship between the modules shown in this embodiment of this application is merely an example for description, and constitutes no limitation on the structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from a charger. The charger may be a wireless charger or a wired charger. In some embodiments of wired charging, the charging management module 140 may receive a charging input from a wired charger through the USB interface 130. In some embodiments of wireless charging, the charging management module 140 may receive a wireless charging input through a wireless charging coil of the electronic device 100. At the same time when the charging management module 140 charges the battery 142, the power management module 141 may be used to supply power to the electronic device.

The power management module 141 is configured to connect to the battery 142, the charging management module 140, and the processor 110. The power management module 141 receives an input of the battery 142 and/or the charging management module 140, and supplies power to the processor 110, the internal memory 121, an external memory, the display 194, the camera 193, the wireless communications module 160, and the like. The power management module 141 may be configured to monitor parameters such as a battery capacity, a battery cycle count, and a battery state of health (electric leakage or impedance). In some other embodiments, the power management module 141 may alternatively be disposed in the processor 110. In some other embodiments, the power management module 141 and the charging management module 140 may be alternatively disposed in a same component.

A wireless communications function of the electronic device 100 may be implemented by using the antenna 1, the antenna 2, the mobile communications module 150, the wireless communications module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further multiplexed, to improve antenna utilization. For example, the antenna 1 may be multiplexed as a diversity antenna in a wireless local area network. In some other embodiments, an antenna may be used in combination with a tuning switch.

The mobile communications module 150 may provide a wireless communications solution that is applied to the electronic device 100 and that includes 2G/3G/4G/5G. The mobile communications module 150 may include at least one filter, a switch, a power amplifier, a low noise amplifier (low noise amplifier, LNA), and the like. The mobile communications module 150 may receive an electromagnetic wave through the antenna 1, perform processing such as filtering or amplification on the received electromagnetic wave, and transmit the electromagnetic wave to the modem processor for demodulation. The mobile communications module 150 may further amplify a signal modulated by the modem processor, and convert the signal into an electromagnetic wave for radiation through the antenna 1. In some embodiments, at least some function modules of the mobile communications module 150 may be disposed in the processor 110. In some embodiments, at least some function modules of the mobile communications module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The baseband processor processes the low-frequency baseband signal, and then transfers an obtained signal to the application processor. The application processor outputs a sound signal by using an audio device (which is not limited to the speaker 170A, the receiver 170B, and the like), or displays an image or a video on the display 194. In some embodiments, the modem processor may be an independent component. In some other embodiments, the modem processor may be independent of the processor 110, and provided in a same device as the mobile communications module 150 or another function module.

The wireless communications module 160 may provide a wireless communications solution that is applied to the electronic device 100, and that includes a wireless local area network (wireless local area networks, WLAN) (for example, a wireless fidelity (wireless fidelity, Wi-Fi) network), Bluetooth (bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communications module 160 may be one or more components integrating at least one communications processor module. The wireless communications module 160 receives an electromagnetic wave through the antenna 2, performs frequency modulation and filtering processing on the electromagnetic wave signal, and sends a processed signal to the processor 110. The wireless communications module 160 may further receive a to-be-sent signal from the processor 110, perform frequency modulation and amplification on the signal, and convert the signal into an electromagnetic wave for radiation through the antenna 2.

In some embodiments, the antenna 1 and the mobile communications module 150 in the electronic device 100 are coupled, and the antenna 2 and the wireless communications module 160 in the electronic device 100 are coupled, so that the electronic device 100 can communicate with a network and another device by using a wireless communications technology. The wireless communications technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation systems, SBAS).

The electronic device 100 may implement a display function through the GPU, the display 194, the application processor, and the like. The GPU is a microprocessor for image processing, and is connected to the display 194 and the application processor. The GPU is configured to perform mathematical and geometric calculation, and render an image. The processor 110 may include one or more GPUs that execute program instructions to generate or change display information.

The display 194 is configured to display an image, a video, or the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diodes, QLED), or the like. In some embodiments, the electronic device 100 may include one or N displays 194, where N is a positive integer greater than 1.

The electronic device 100 may implement a photographing function through the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP for converting the electrical signal into a digital image signal. The ISP outputs the digital image signal to the DSP for processing. The DSP converts the digital image signal into an image signal in a standard format, for example, RGB or YUV In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transformation or the like on frequency energy.

The video codec is configured to compress or decompress a digital video. The electronic device 100 may support one or more types of video codecs. Therefore, the electronic device 100 may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor, quickly processes input information by referring to a structure of a biological neural network, for example, by referring to a mode of transfer between human brain neurons, and may further continuously perform self-learning. The NPU may implement applications such as intelligent cognition of the electronic device 100, for example, image recognition, facial recognition, speech recognition, and text understanding.

The external memory interface 120 may be used to connect to an external storage card, for example, a micro SD card, to extend a storage capability of the electronic device 100. The external memory card communicates with the processor 110 by using the external memory interface 120, to implement a data storage function. For example, files such as music and videos are stored in the external storage card.

The internal memory 121 may be configured to store computer-executable program code. The executable program code includes instructions. The processor 110 implements various function applications and data processing of the electronic device 100 by running the instructions stored in the internal memory 121. The internal memory 121 may include a program storage area and a data storage area. The program storage area may store an operating system, an application required by at least one function (for example, a sound playing function or an image playing function), and the like. The data storage area may store data (such as audio data and a phone book) and the like that are created during use of the electronic device 100. In addition, the internal memory 121 may include a high-speed random access memory, and may further include a non-volatile memory, for example, at least one magnetic disk storage device, a flash memory device, and a universal flash storage (universal flash storage, UFS).

The electronic device 100 may implement an audio function, for example, music playing and recording, through the audio module 170, the speaker 170A, the receiver 170B, the microphone 170C, the headset jack 170D, the application processor, and the like.

The audio module 170 is configured to convert digital audio information into an analog audio signal output, and is also configured to convert an analog audio input into a digital audio signal. The audio module 170 may be further configured to encode and decode an audio signal. In some embodiments, the audio module 170 may be disposed in the processor 110, or some function modules in the audio module 170 are disposed in the processor 110.

The speaker 170A, also referred to as a "loudspeaker", is configured to convert an audio electrical signal into a sound signal. The electronic device 100 may listen to music or answer a hands-free call by using the speaker 170A.

The receiver 170B, also referred to as an "earpiece", is configured to convert an electrical audio signal into a sound signal. When a call is answered or a voice message is received through the electronic device 100, the receiver 170B may be put close to a human ear to listen to a voice.

The microphone 170C, also referred to as a "mike" or a "mic", is configured to convert a sound signal into an electrical signal. When making a call or sending a voice message, a user may make a sound by moving a human mouth close to the microphone 170C, to input the sound signal to the microphone 170C. At least one microphone 170C may be disposed in the electronic device 100. In some other embodiments, two microphones 170C may be disposed in the electronic device 100, to implement a noise reduction function, in addition to collecting the sound signal. In some other embodiments, three, four, or more microphones 170C may alternatively be disposed in the electronic device 100, to collect a sound signal, implement noise reduction, and identify a sound source, to implement a directional recording function and the like.

The headset jack 170D is configured to connect to a wired headset. The headset jack 170D may be the USB interface 130, or may be a 3.5 mm open mobile terminal platform (open mobile terminal platform, OMTP) standard interface or a Cellular Telecommunications Industry Association of the USA (Cellular Telecommunications Industry Association of the USA, CTIA) standard interface.

The pressure sensor 180A is configured to sense a pressure signal, and can convert the pressure signal into an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines pressure intensity based on a capacitance change. When a touch operation is performed on the display 194, the electronic device 100 detects intensity of the touch operation through the pressure sensor 180A. The electronic device 100 may also calculate a touched position based on a detected signal of the pressure sensor 180A. In some embodiments, touch operations performed on a same touch position but with different touch operation intensity may correspond to different operation instructions. For example, when a touch operation with a touch operation intensity less than a first pressure threshold is performed on a Messaging application icon, an instruction of viewing short messages is executed. When a touch operation with a touch operation intensity greater than or equal to the first pressure threshold is performed on the Messaging application icon, an instruction of creating a new short message is executed.

The gyro sensor 180B may be configured to determine a motion posture of the electronic device 100. In some embodiments, angular velocities of electronic device 100 around three axes (which are x, y, and z axes) may be determined by using the gyro sensor 180B. The gyro sensor 180B may be configured to implement image stabilization during photographing. For example, when the shutter is pressed, the gyro sensor 180B detects an angle at which the electronic device 100 jitters, calculates, based on the angle, a distance for which a lens module needs to compensate, and allows the lens to cancel the jitter of the electronic device 100 through reverse motion, to implement image stabilization. The gyro sensor 180B may be further used in a navigation scenario and a motion-sensing game scenario.

The barometric pressure sensor 180C is configured to measure barometric pressure. In some embodiments, the electronic device 100 calculates an altitude based on a value of the barometric pressure measured by the barometric pressure sensor 180C, to assist in positioning and navigation.

The magnetic sensor 180D includes a Hall sensor. The electronic device 100 may detect opening and closing of a flip cover by using the magnetic sensor 180D. In some embodiments, when the electronic device 100 is a flip device, the electronic device 100 may detect opening and closing of the flip by using the magnetic sensor 180D. Further, a feature such as automatic unlocking upon opening of the flip cover is set based on a detected opening or closing state of the flip cover.

The acceleration sensor 180E may detect accelerations in various directions (usually on three axes) of the electronic device 100. When the electronic device 100 is still, a magnitude and a direction of gravity may be detected. The acceleration sensor 180E may be further configured to identify a posture of the electronic device, and is used in an application such as switching between landscape mode and portrait mode or a pedometer.

The distance sensor 180F is configured to measure a distance. The electronic device 100 may measure a distance through infrared or laser. In some embodiments, in a photographing scenario, the electronic device 100 may measure a distance by using the distance sensor 180F, to implement quick focusing.

The optical proximity sensor 180G may include, for example, a light-emitting diode (LED) and an optical detector such as a photodiode. The light-emitting diode may be an infrared light-emitting diode. The electronic device 100 emits infrared light by using the light-emitting diode. The electronic device 100 detects infrared reflected light from a nearby object by using the photodiode. When sufficient reflected light is detected, the electronic device 100 may determine that there is an object near the electronic device 100. When insufficient reflected light is detected, the electronic device 100 may determine that there is no object near the electronic device 100. The electronic device 100 may detect, by using the optical proximity sensor 180G, that the user holds the electronic device 100 close to an ear for a call, to automatically turn off a screen for power saving. The optical proximity sensor 180G may also be used in a leather case mode or a pocket mode to automatically unlock or lock the screen.

The ambient light sensor 180L is configured to sense ambient light brightness. The electronic device 100 may adaptively adjust brightness of the display 194 based on the sensed ambient light brightness. The ambient light sensor 180L may also be configured to automatically adjust a white balance during photographing. The ambient light sensor 180L may also cooperate with the optical proximity sensor 180G to detect whether the electronic device 100 is in a pocket, to avoid an accidental touch.

The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the electronic device 100 executes a temperature processing policy based on the temperature detected by the temperature sensor 180J. For example, when the temperature reported by the temperature sensor 180J exceeds a threshold, the electronic device 100 lowers performance of a processor near the temperature sensor 180J, to reduce power consumption and implement thermal protection. In some other embodiments, when the temperature is less than another threshold, the electronic device 100 heats the battery 142 to prevent the electronic device 100 from being shut down abnormally due to a low temperature. In some other embodiments, when the temperature is less than still another threshold, the electronic device 100 boosts an output voltage of the battery 142 to avoid abnormal shutdown due to a low temperature.

The touch sensor 180K is also referred to as a "touch panel". The touch sensor 180K may be disposed on the display 194, and the touch sensor 180K and the display 194 form a touchscreen, which is also referred to as a "touch screen". The touch sensor 180K is configured to detect a touch operation performed on or near the touch sensor. The touch sensor may transfer the detected touch operation to the application processor to determine a type of a touch event. A visual output related to the touch operation may be provided through the display 194. In some other embodiments, the touch sensor 180K may alternatively be disposed on a surface of the electronic device 100 in a position different from that of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a human pulse, and receive a blood pressure beating signal. In some embodiments, the bone conduction sensor 180M may be disposed in a headset, to be integrated into a bone conduction headset. The audio module 170 may parse out a voice signal based on the vibration signal of the sound vibration bone obtained by the bone conduction sensor 180M, to implement a voice function. The application processor may parse out heart rate information based on the blood pressure beating signal obtained by the bone conduction sensor 180M, to implement a heart rate detection function.

The button 190 includes a power button, a volume button, and the like. The button 190 may be a mechanical button, or may be a touch-sensitive button. The electronic device 100 may receive a button input, and generate a button signal input related to user setting and function control of the electronic device 100.

The motor 191 may generate a vibration prompt. The motor 191 may be used for vibration alerts for incoming calls, and may also be used for touch vibration feedback. For example, touch operations on different applications (such as photographing and audio playing) may correspond to different vibration feedback effects. For touch operations performed on different areas of the display 194, the motor 191 may also correspond to different vibration feedback effects. Different application scenarios (such as a time reminder, information receiving, an alarm clock, and a game) may also correspond to different vibration feedback effects. A touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The SIM card interface 195 may support a nano-SIM card, a micro-SIM card, a SIM card, and the like. A plurality of cards may be simultaneously inserted into a same SIM card interface 195. Types of the plurality of cards may be the same as or different. The SIM card interface 195 may also be compatible with different types of SIM cards. The SIM card interface 195 may also be compatible with an external storage card. The electronic device 100 interacts with a network through the SIM card, to implement functions such as calling and data communication. In some embodiments, the electronic device 100 uses an embedded SIM (embedded-SIM, eSIM) card, that is, an embedded SIM card. The eSIM card may be embedded into the electronic device 100, and cannot be separated from the electronic device 100.

It should be understood that a calling card in the embodiments of this application includes but is not limited to a SIM card, an eSIM card, a universal subscriber identity module (universal subscriber identity module, USIM), a universal integrated circuit card (universal integrated circuit card, UICC), and the like.

A software system of the electronic device 100 may use a layered architecture, an event-driven architecture, a microkernel architecture, a micro service architecture, or a cloud architecture. In embodiments of this application, an Android system with a layered architecture is used as an example to describe a software structure of the electronic device 100.

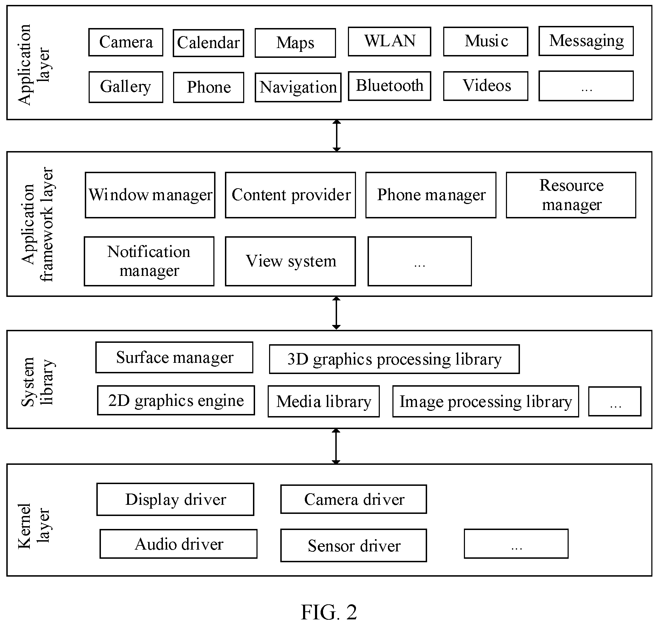

FIG. 2 is a block diagram of a software structure of the electronic device 100 according to this embodiment of this application. In a layered architecture, software is divided into several layers, and each layer has a clear role and task. The layers communicate with each other through a software interface. In some embodiments, the Android system is divided into four layers: an application layer, an application framework layer, an Android runtime (Android runtime) and system library, and a kernel layer from top to bottom. The application layer may include a series of application packages.

As shown in FIG. 2, the application packages may include applications such as Camera, Gallery, Calendar, Phone, Maps, Navigation, WLAN, Bluetooth, Music, Videos, and Messaging.

The application framework layer provides an application programming interface (application programming interface, API) and a programming framework for an application at the application layer. The application framework layer includes some predefined functions.

As shown in FIG. 2, the application framework layer may include a window manager, a content provider, a view system, a phone manager, a resource manager, a notification manager, and the like.

The window manager is configured to manage a window program. The window manager may obtain a display size, determine whether there is a status bar, lock a screen, take a screenshot, and the like.

The content provider is configured to store and obtain data, and enable the data to be accessed by an application. The data may include a video, an image, audio, calls that are made and received, a browsing history and bookmarks, a phone book, and the like.

The view system includes visual controls, such as a control for displaying a text and a control for displaying an image. The view system may be configured to construct an application. A display interface may include one or more views. For example, a display interface including a short message notification icon may include a view for displaying text and a view for displaying pictures.

The phone manager is configured to provide a communications function for the electronic device 100, for example, management of a call status (including answering, declining, or the like).

The resource manager provides resources for applications, such as localized strings, icons, images, layout files, and video files.

The notification manager enables an application to display notification information in the status bar, and may be configured to transmit a notification-type message. The displayed information may automatically disappear after a short pause without user interaction. For example, the notification manager is configured to notify download completion, provide a message notification, and the like. The notification manager may alternatively be a notification that appears in a top status bar of the system in a form of a graph or a scroll bar text, for example, a notification of an application running on the background or a notification that appears on a screen in a form of a dialog window. For example, text information is displayed in the status bar, an announcement is given, the electronic device vibrates, or the indicator light blinks.

The Android runtime includes a kernel library and a virtual machine. The Android runtime is responsible for scheduling and management of the Android system.

The kernel library includes two parts: One part is a function that needs to be invoked by a Java language, and the other part is a kernel library of Android.

The application layer and the application framework layer run on a virtual machine. The virtual machine executes Java files at the application layer and the application framework layer as binary files. The virtual machine is configured to perform functions such as object lifecycle management, stack management, thread management, security and exception management, and garbage collection.

The system library may include a plurality of function modules, for example, a surface manager (surface manager), a media library (media libraries), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports a plurality of common audio and video formats for playback and recording, as well as static image files. The media library may support a plurality of audio and video encoding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

It should be understood that the technical solutions in embodiments of this application may be applied to systems such as Android, iOS, and HarmonyOS.

The kernel layer is a layer between hardware and software. The kernel layer includes at least a display driver, a camera driver, an audio driver, and a sensor driver.

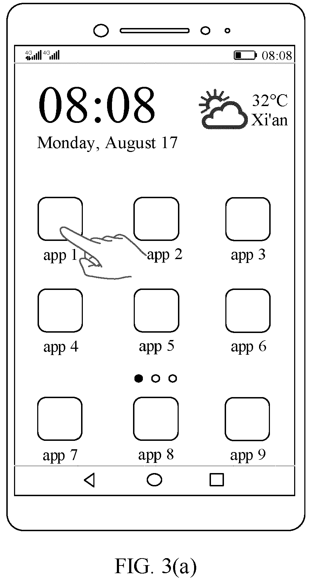

FIG. 3(a) to FIG. 3(j) show a group of graphical user interfaces (graphical user interface, GUI) according to an embodiment of this application.

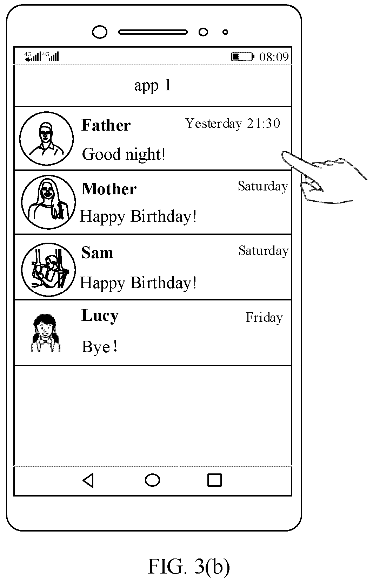

Refer to a GUI shown in FIG. 3(a). The GUI is a home screen of a mobile phone. The home screen of the mobile phone includes icons of a plurality of applications (app 1 to app 9). When the mobile phone detects an operation that a user taps an icon of app 1, the mobile phone may open app 1, and display a GUI shown in FIG. 3(b).

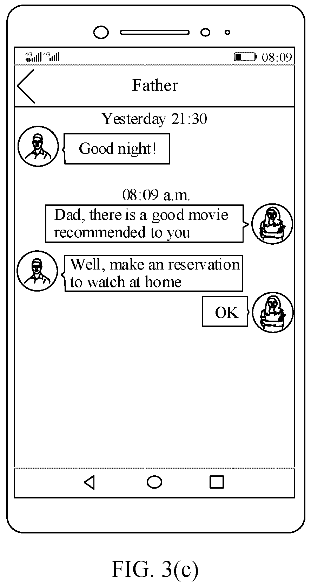

Refer to a GUI shown in FIG. 3(b). The GUI is a display interface of app 1. App 1 may be an instant messaging application. The display interface includes chat records of a plurality of contacts. The chat record of each contact includes an avatar of the contact, a nickname of the contact, a latest chat record with the contact, and time information of the latest chat record. When the mobile phone detects that the user taps the chat record with the father, the mobile phone may display a GUI shown in FIG. 3(c).

Refer to a GUI shown in FIG. 3(c). The GUI is a chat interface between a daughter and a father. The daughter may send text information to the father through the chat interface, "Dad, there is a good movie recommended to you." After receiving the text information "Well, make a reservation to watch at home" sent by the father by using another electronic device, the mobile phone may display the information to the daughter by using the display interface. After that, the daughter may continue to send text information "OK" to the father through the chat interface.

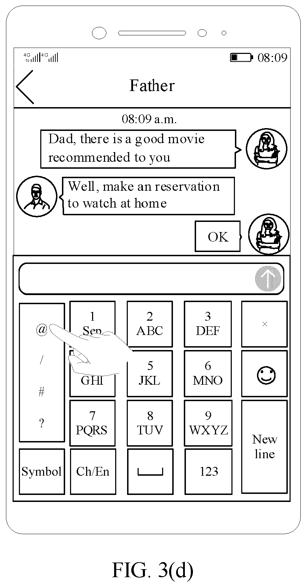

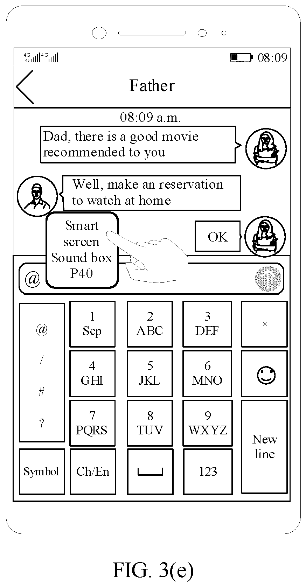

Refer to a GUI shown in FIG. 3(d). The GUI is another chat interface between the daughter and the father. If the daughter wants to reserve a movie through a smart screen, the daughter can enter "@" in a text input box. After the mobile phone detects an operation of entering "@" in the text input box by the user, the mobile phone may display a GUI shown in FIG. 3(e).

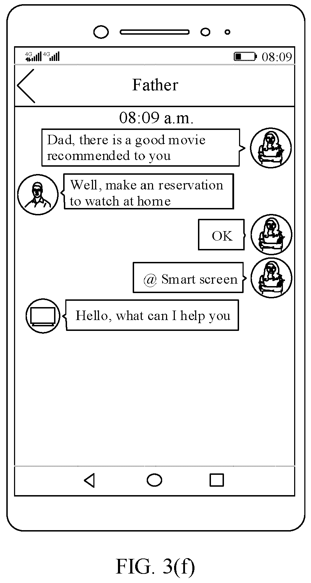

Refer to a GUI shown in FIG. 3(e). The GUI is another chat interface between the daughter and the father. After the mobile phone detects an operation of entering "@" in the text input box by the user, the mobile phone may display a device list, where the device list includes a smart screen, a sound box, and a P40. After the mobile phone detects an operation of selecting the smart screen by the user, the mobile phone may display a GUI shown in FIG. 3(f).

In an embodiment, the smart screen, the sound box, and the P40 in the device list may be devices under a same account. For example, the P40 may be a mobile phone currently used by the user, and app 1 on the mobile phone logs in to a Huawei account 1 of the user. In this case, the mobile phone may obtain device information (for example, a device type, whether an intelligence is supported, and a supported function) of another device that logs in to the Huawei account 1. In this way, the mobile phone displays the corresponding device in the device list. For example, the smart screen, the sound box, and the P40 may be devices that have an intelligence capability and that are under the Huawei account 1.

In this embodiment of this application, a manner in which the mobile phone displays the device information of the one or more devices in the device list includes but is not limited to:

### Manner 1

After detecting that the user enters "@" in the text input box, the mobile phone may request device information of another device under the Huawei account 1 from a server. After receiving the device information sent by the server, the mobile phone may determine, from the device information, devices that have an intelligence and that are online, so as to display device information (for example, smart screen and sound box) of these devices and device information (for example, a P40) of the mobile phone in the device list.

### Manner 2

After detecting that the user enters "@" in the text input box, the mobile phone requests device information of another online device that has an intelligence capability and that is under the Huawei account 1 from a server. After receiving the device information sent by the server, the mobile phone may display device information (for example, smart screen and sound box) of these devices and device information (for example, a P40) of the mobile phone in the device list.

### Manner 3

When the user logs in to Huawei account 1 on a device, the device may send its device information to a server. After receiving the device information sent by the device, the server may send the device information to the mobile phone, so that the mobile phone may store device information of another device under the Huawei account 1. When the mobile phone detects that the user taps "@", the mobile phone may send a query request to a device that has an intelligence capability and that is under the Huawei account 1, where the query request is used to request to determine whether the device is online. If the mobile phone (for example, a P40) receives responses sent by the smart screen and the sound box, the mobile phone may display the smart screen, the sound box, and the P40 in the device list.

Refer to a GUI shown in FIG. 3(f). The GUI is another chat interface between the daughter and the father. After the mobile phone detects an operation of selecting the smart screen by the user, the mobile phone may display text information "@smart screen" in a chat interface, and the mobile phone may send an instruction to the smart screen. If the smart screen is not woken up, the instruction may be used to wake up the smart screen; or if the smart screen is woken up, the instruction may be used to indicate that the user expects to interact with the smart screen by using the mobile phone.

For example, if the smart screen is in a non-wake-up state when receiving the instruction, the smart screen performs a wake-up operation when receiving the instruction, and sends an execution result of the instruction to the mobile phone. The execution result may include text information such as "Hello, what can I help you?" After receiving the text information, the mobile phone displays the text information by using the chat interface. As shown in FIG. 3(f), the mobile phone may display, in the chat interface, text information "Hello, what can I help you?" replied by the smart screen, and the user may enter text information in the chat interface to control the smart screen.

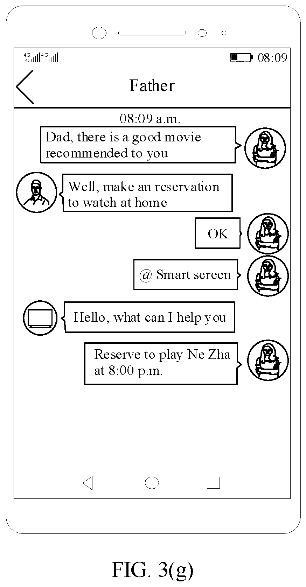

Refer to a GUI shown in FIG. 3(g). The GUI is another chat interface between the daughter and the father. After the mobile phone detects that the user replies with text information "Reserve to play Ne Zha at 8:00 p.m.", the mobile phone may send an instruction to the smart screen, where the instruction includes the text information. The smart screen may identify slot information and user intent in the text information by using a semantic understanding (natural language understanding, NLU) module.

The smart screen may search for movies related to "Ne Zha". If the searched movies related to "Ne Zha" include "Movie 1" and "Movie 2", the smart screen may determine that information about a movie name in the slot is missing. The smart screen may send information about the "Movie 1" and "Movie 2" (for example, thumbnails of the "Movie 1" and "Movie 2") and request information to the mobile phone. The request information is used to request the user to determine, from the "Movie 1" and "Movie 2", which one is to be played.

In the foregoing embodiment, an example in which the user replies with text information in the chat interface is used for description. It may be understood that the user may also reply with voice information in the chat interface. For example, the user may reply, in the chat interface by using a voice, "Reserve to play Ne Zha at 8:00 p.m.". In this case, the mobile phone may send the voice information to the smart screen, and a speech recognition (automatic speech recognition, ASR) module in the smart screen may first convert the voice information into text information, to analyze the text information. For another example, the user may further reply with an image or a file in the chat interface, which is not limited in this embodiment.

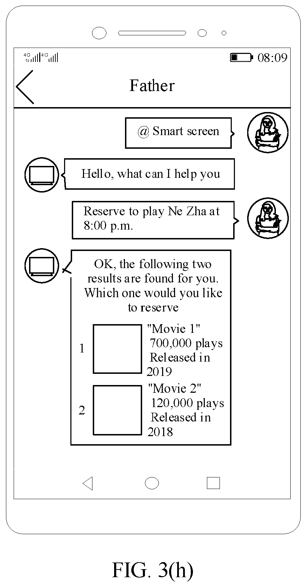

Refer to a GUI shown in FIG. 3(h). The GUI is another chat interface between the daughter and the father. After the mobile phone receives the information about the "Movie 1" and "Movie 2" and the request information that are sent by the smart screen, the mobile phone may prompt, based on the information about the "Movie 1" and "Movie 2" and the request information, the user "OK, the following two results are found for you. Which one would you like to reserve?" and display the information about the "Movie 1" and "Movie 2".

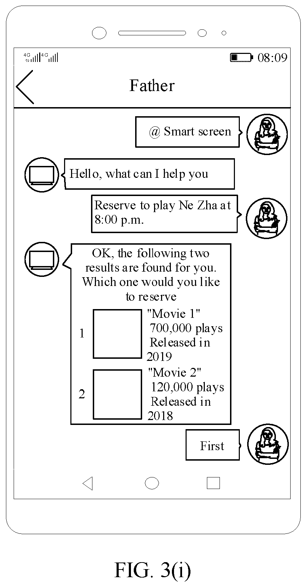

Refer to a GUI shown in FIG. 3(i). The GUI is another chat interface between the daughter and the father. After receiving text information "First" replied by the user, the mobile phone may send the text information to the smart screen. After receiving the text information, the smart screen may determine that a movie that the user wants to reserve is the "Movie 1". In this case, the smart screen may determine the user intent and the slot information. For example, Table 1 shows the user intent and the slot information that are determined by the smart screen.

**Table 1**

| Intent (intent) | "Reserve a movie" |
|---|---|
| Slot (slot) | Time = "8:00 p.m." |
| | Movie name = "Movie 1" |

In the foregoing example, two concepts are mentioned: the intent and the slot. The following describes the two concepts in detail.

### Intent

The intent may be understood as a classifier, to determine a type of a sentence expressed by a user. Then, a program corresponding to the type performs special parsing. In an implementation, the "program corresponding to the type" may be a bot (Bot). For example, the user says: "Play a happy song for me". The NLU module determines that the intent category of the user is music, and therefore calls out a music bot (Bot) to recommend a song to the user for playing. When the user feels something wrong while listening to the song, the user says: "Change a song", and the music bot continues to serve the user until the user expresses another question. When the intent is no longer music, the music bot is switched to another bot to serve the user.

### Slot

After the user intent is determined, the NLU module needs to further understand content in the dialog. For simplicity, a core part may be selected for understanding, and another part may be ignored. The most important part may be referred to as a slot (Slot). For example, if the user intend is "reserving a movie", two core slots may be defined, which are "time" and "movie name". For another example, if the user intend is "booking an air ticket", three core slots may be defined, which are "takeoff time", "place of departure", and "destination".

After determining the user intent and the slot information, the NLU module of the smart screen may send the user intent and the slot information to an intent processing module of the smart screen. The intent processing module may determine that the intent of the user is "reserving a movie", and slot information related to the intent is "8 p.m." and "Movie 1", so as to reserve playing of the Movie 1 at 8 p.m. for the user. After making a reservation to play the "Movie 1" for the user at 8:00 p.m., the smart screen may send, to the mobile phone, an execution result of the user instruction, where the execution result may be text information "OK, the "Movie 1" has been reserved to play for you at 8:00 p.m.".

It should be understood that, in this embodiment of this application, if a smart device includes an NLU module, it may be considered that the smart device has an intelligence capability (or has a smart assistant).

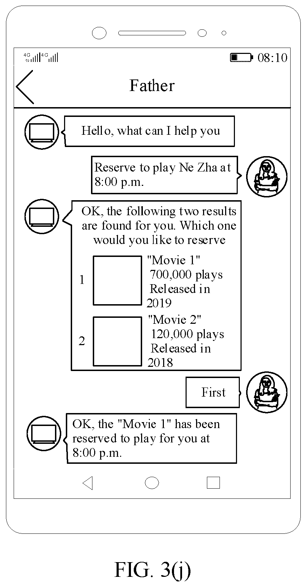

Refer to a GUI shown in FIG. 3(j). The GUI is another chat interface between the daughter and the father. After receiving the text information sent by the smart screen, the mobile phone may present, in the chat interface, the text information "OK, the "Movie 1" has been reserved to play for you at 8:00 p.m." sent by the smart screen.

In this embodiment of this application, when the user needs to deliver an instruction to another device in a process of chatting with another user, the user needs only to enter "@" in a text input box to select a device that needs to execute the instruction. In addition, the instruction may be sent by using text information (or voice), and the mobile phone may send the corresponding instruction to the corresponding device, so that the corresponding device executes the instruction. This avoids a process in which the user returns to the vicinity of the device to deliver the instruction, makes the smart assistant of the device humanized, and more easily completes control on the smart assistant in a chat process, thereby helping improve user experience.

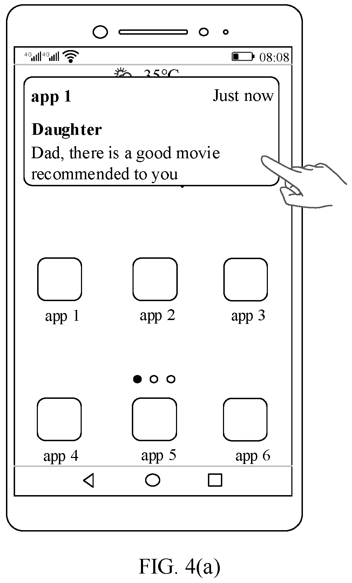

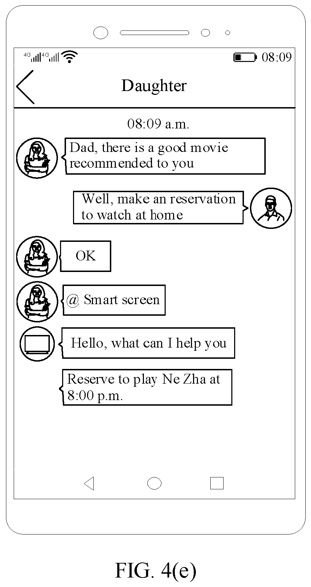

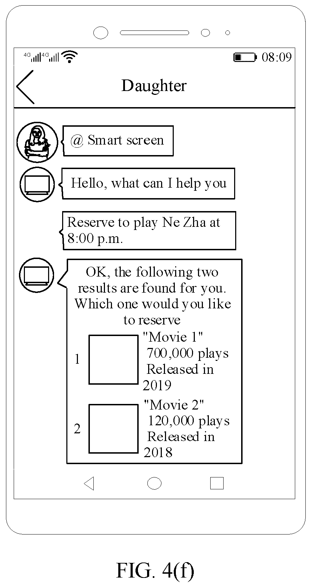

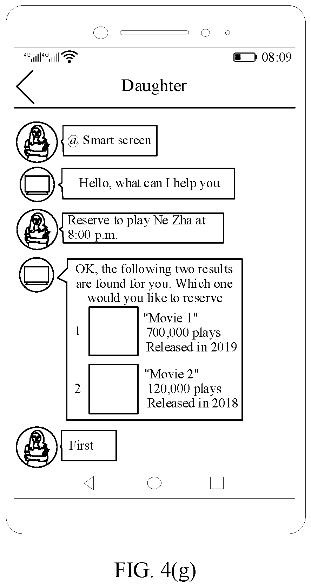

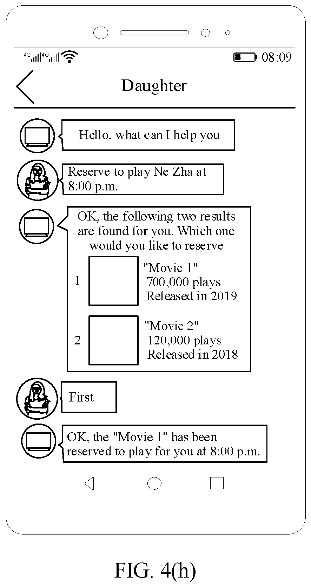

With reference to a group of GUIs in FIG. 3(a) to FIG. 3(j), the foregoing shows a change process of a display interface of the mobile phone of the daughter. With reference to another group of GUIs shown in FIG. 4(a) to FIG. 4(h), the following displays a change process of a mobile phone interface of a contact father.

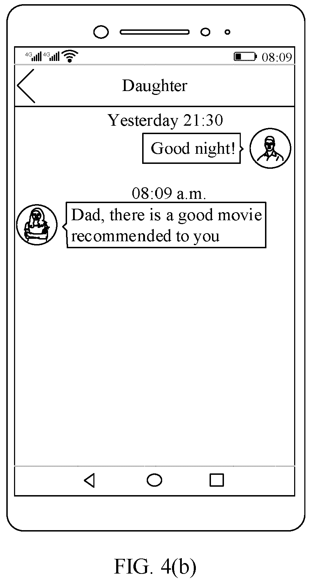

Refer to the GUI shown in FIG. 4(a). After the mobile phone of the father receives a message sent by the daughter, the mobile phone may display a message reminder box, where the message reminder box prompts that the message is a message from app 1, a user sending the message is the daughter, and content of the message is "Dad, there is a good movie recommended to you". After detecting an operation of tapping the message reminder box by the user, the mobile phone may display a GUI shown in FIG. 4(b).

Refer to a GUI shown in FIG. 4(b). The GUI is a chat interface between the father and the daughter. The mobile phone may display the message "Dad, there is a good movie recommended to you" from your daughter in the chat interface.

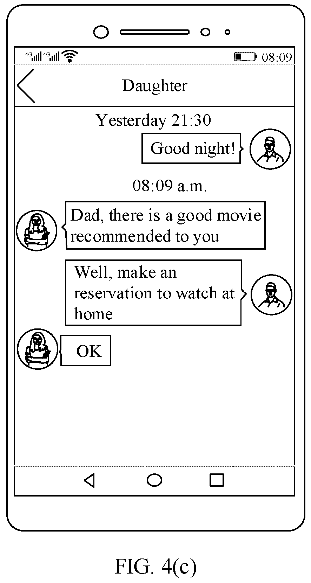

Refer to a GUI shown in FIG. 4(c). The GUI is another chat interface between the father and the daughter. The father may send text information "Well, make a reservation to watch at home" to the daughter through the chat interface. After receiving the text information "OK" sent by the daughter by using another electronic device, the mobile phone may display the text information by using the chat interface.

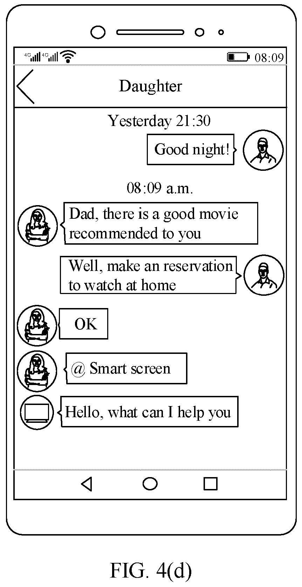

FIG. 4(d) to FIG. 4(h) correspond to FIG. 3(f) to FIG. 3(j), and the mobile phone may display, in the chat interface, an interaction process between the daughter and the smart screen.

In this embodiment of this application, the father may see, in the chat interface, the interaction process between the daughter and the smart screen, so as to determine that the daughter has successfully delivered an instruction to the smart screen, and the daughter does not need to convey the instruction to the father again. This avoids a process in which the father needs to ask the daughter again whether the instruction is successfully delivered to the smart screen, thereby helping improve user experience.

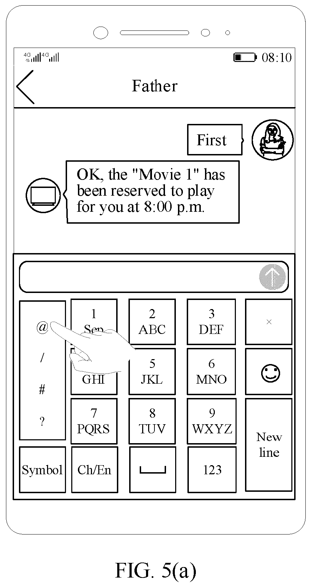

FIG. 5(a) to FIG. 5(c) show still another group of GUIs according to an embodiment of this application.

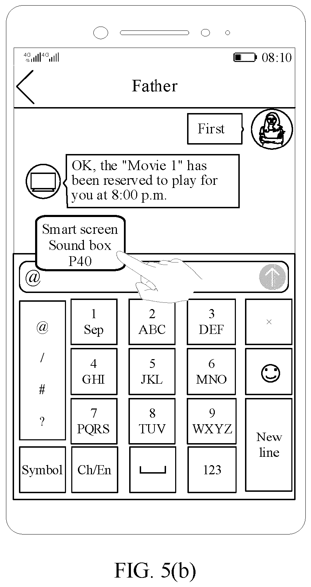

Refer to a GUI shown in FIG. 5(a). The GUI is another chat interface between the daughter and the father. After completing interaction with the smart screen by using the chat interface, the daughter may further interact with the smart sound box by using the chat interface. As shown in FIG. 5(a), after detecting that the user enters "@", the mobile phone may display a GUI shown in FIG. 5(b).

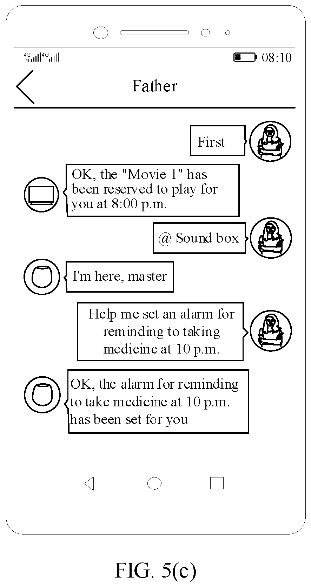

Refer to the GUI shown in FIG. 5(b). The GUI is another chat interface between the daughter and the father. When the mobile phone detects an operation that the user taps "@", the mobile phone may display a device list, where the device list includes the smart screen, the sound box, and the P40. After the mobile phone detects an operation of selecting the sound box by the user, the mobile phone may display a GUI shown in FIG. 5(c).

Refer to the GUI shown in FIG. 5(c). The GUI is another chat interface between the daughter and the father. After the mobile phone detects an operation of selecting the sound box by the user, the mobile phone may display, in the chat interface, text information "@sound box" sent by the daughter, and the mobile phone may send an instruction to the sound box. If the sound box is in a non-wake-up state, the instruction may be used to wake up the sound box; or if the sound box is in a wake-up state, the instruction may be used to indicate that the user wants to interact with the sound box by using the mobile phone.

For example, if the sound box is in the non-wake-up state when receiving the instruction, the sound box performs a wake-up operation when receiving the instruction, and sends an execution result of the instruction to the mobile phone, where the execution result includes text information "I'm here, master". After receiving the text information, the mobile phone displays the text information by using the chat interface. As shown in FIG. 5(c), the mobile phone may display, in the chat interface, that the sound box replies with text information "I'm here, master".

After the mobile phone detects that the user continues to enter text information "Help me set an alarm for reminding to taking medicine at 10 p.m." in the chat interface, the mobile phone may continue to send an instruction to the sound box, where the instruction includes the text information "Help me set an alarm for reminding to taking medicine at 10 p.m.". After receiving the instruction, the sound box may identify user intent and slot information in the text information by using an NLU module. For example, Table 2 shows the user intent and the slot information that are determined by the sound box.

**Table 2**

| Intent | "Setting an alarm" |
|---|---|
| Slot | Time = 10:00 p.m. |
| | Alarm content = "reminding to take medicine" |

After determining the user intent and the slot information, the NLU module of the sound box may send the user intent and the slot information to an intent processing module of the sound box. The intent processing module may determine that the user intent is "setting an alarm", and the slot information related to the intent is "10 p.m." and "reminding to take medicine", so as to set an alarm at 10 p.m. for the user. After setting the alarm at 10 p.m. for the user, the sound box may send an execution result of the user instruction to the mobile phone, where the execution result may be text information "OK, the alarm for reminding to take medicine at 10 p.m. has been set for you". After receiving the execution result, the mobile phone may display, in the chat interface, that the sound box replies with the text information "OK, the alarm for reminding to take medicine at 10 p.m. has been set for you".

In this embodiment of this application, the user may send an instruction to a plurality of devices in the chat interface. This avoids a process in which the user needs to return to the vicinity of a corresponding device to send an instruction, makes the smart assistant of the device humanized, and more easily completes control on the smart assistant in a chat process, thereby helping improve user experience.

FIG. 5(a) to FIG. 5(c) are described by using an example in which a user performs an @ operation on a plurality of devices separately. It may be understood that the user may also perform an @ operation on a plurality of devices at the same time. For example, after detecting that the user selects the sound box from the device list, the mobile phone may not send "@sound box", but display "@sound box" in the text input box. Then, the mobile phone detects again that the user taps "@" and selects the P40 from the device list, so that the mobile phone displays "@sound box@smart screen" in the text input box. After the mobile phone detects that the user taps a sending control, the mobile phone may display that the user replies "@sound box@smart screen" in the chat interface, so that the mobile phone may send an instruction to the sound box and the P40 (for example, the instruction is used to wake up the sound box and the P40). Then, when the mobile phone detects that the user replies "Help me set an alarm at 8:00 a.m." in the chat interface, the mobile phone may send another instruction to the sound box and the P40, where the another instruction carries text information "Help me set an alarm at 8:00 a.m.".

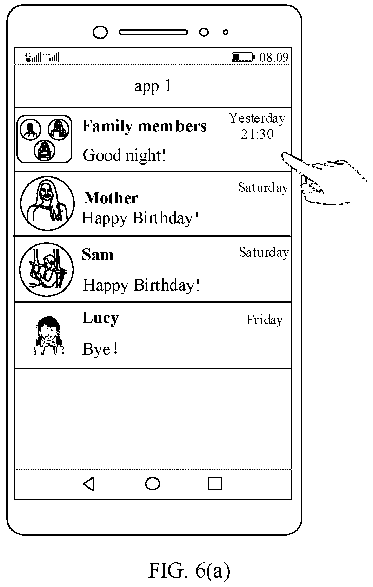

FIG. 3(a) to FIG. 5(c) are described by using a chat between the daughter and the father as an example. It may be understood that, as shown in FIG. 6(a) to FIG. 6(g), the foregoing method is also applicable to a group chat process.

FIG. 6(a) to FIG. 6(g) show still another group of GUIs according to an embodiment of this application.

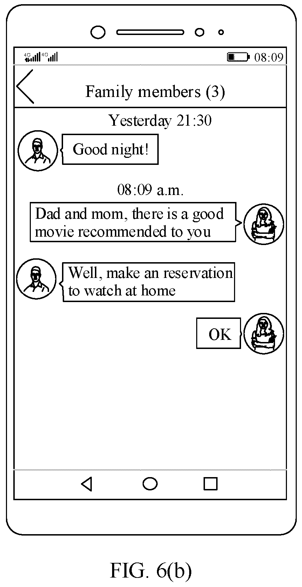

Refer to a GUI shown in FIG. 6(a). The GUI is another display interface of app 1. The display interface includes chat records of a plurality of contacts. The chat records of the plurality of contacts include a chat record of a group (a group name is Family members, and members in the group include a father, a mother, and a daughter). When a mobile phone detects that a user taps a chat record of the group, the mobile phone may display a GUI shown in FIG. 6(b).

Refer to a GUI shown in FIG. 6(b). The GUI is a chat interface of the group. The daughter may send text information in the group, "Mom and dad, there is a good movie recommended to you." The father may reply in the group with text information "Well, make a reservation to watch at home." The daughter may reply with text information "OK" in the chat interface of the group.

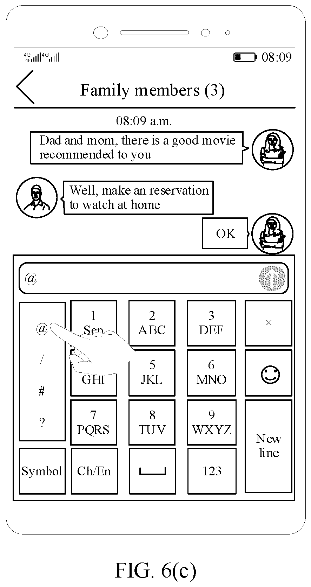

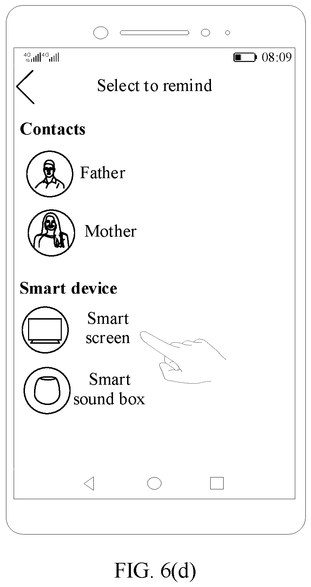

Refer to a GUI shown in FIG. 6(c). The GUI is another chat interface of the group. If the daughter wants to reserve a movie through a smart screen, the daughter can enter "@" in a text input box. After the mobile phone detects an operation of entering "@" in the text input box by the user, the mobile phone may display a GUI shown in FIG. 6(d).

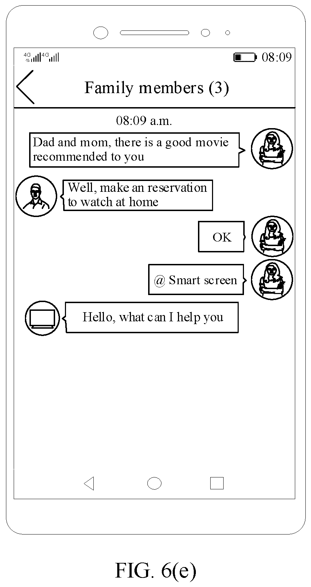

Refer to a GUI shown in FIG. 6(d). The GUI is a display interface of contacts and smart devices that need to be reminded. After the mobile phone detects an operation of entering "@" in the text input box by the user, the mobile phone may display the display interface, where the display interface includes the contacts and the smart devices. The contacts that need to be reminded include the father and the mother. The smart devices that need to be reminded include the smart screen and the smart sound box. After the mobile phone detects an operation of selecting the smart screen by the user, the mobile phone may display a GUI shown in FIG. 6(e).

In an embodiment, a logged-in account on the smart device displayed in the display interface and the logged-in account on the mobile phone are a same account. For example, if the logged-in account on the mobile phone is the Huawei account 1, the logged-in accounts on the smart screen and the smart sound box are also the Huawei account 1. The mobile phone may obtain device information of another device under the Huawei account 1 from a server in advance, so as to display a corresponding device in smart devices that need to be reminded. For example, the smart device that needs to be reminded is a device that has an intelligence capability and that is under the Huawei account 1.

Refer to a GUI shown in FIG. 6(e). The GUI is another chat interface of the group. After the mobile phone detects an operation of selecting the smart screen by the user, the mobile phone may display, in the chat interface, text information "@smart screen" sent by the daughter. In this case, the mobile phone may send an instruction to the smart screen. For a process in which the smart screen executes the instruction, refer to the foregoing description in FIG. 3(a) to FIG. 3(j). For brevity, details are not described herein again. The smart screen may send an execution result of the instruction to the mobile phone. The execution result may include text information such as "Hello, what can I help you?" After receiving the execution result sent by the smart screen, the mobile phone displays, on the chart screen, the text information "Hello, what can I help you?" replied by the smart screen.

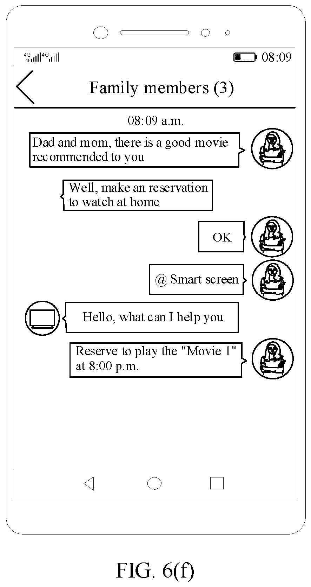

Refer to a GUI shown in FIG. 6(f). The GUI is another chat interface of the group. After seeing the text information replied by the smart screen, the daughter may continue to send an instruction to the smart screen. After the mobile phone detects, in the chat interface, text information "Reserve to play the "Movie 1" at 8:00 p.m." sent by the user, the mobile phone may display the text information and send the text information to the smart screen.

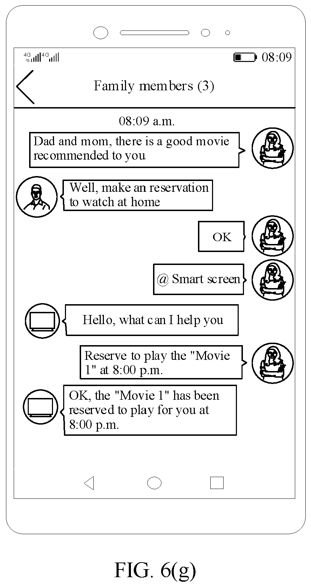

Refer to a GUI shown in FIG. 6(g). The GUI is another chat interface of the group. After receiving the instruction sent by the mobile phone (the instruction includes text information "Reserve to play the "Movie 1" at 8:00 p.m. "), the smart screen may analyze the user intent and the slot information in the instruction. For a specific analysis process, refer to the description in the foregoing embodiment. For brevity, details are not described herein again. After determining the user intent and the slot information, the smart screen may reserve to play the "Movie 1" at 8:00 p.m. for the user. The smart screen may further send an execution result of the instruction to the mobile phone, where the execution result may be text information "OK, the "Movie 1" has been reserved to play for you at 8:00 p.m. ". After receiving the text information, the mobile phone may display, in the chat interface, the text information "OK, the "Movie 1" has been reserved to play for you at 8:00 p.m." replied by the smart screen.

In this embodiment of this application, in the chat interface of the group, in addition to reminding another contact in the group, the user may further remind the smart device, so as to deliver an instruction to the smart device in the chat interface of the group. This avoids a process in which the user returns to the vicinity of the device to deliver the instruction, makes the smart assistant of the device humanized, and more easily completes control on the smart assistant in a chat process, thereby helping improve user experience.

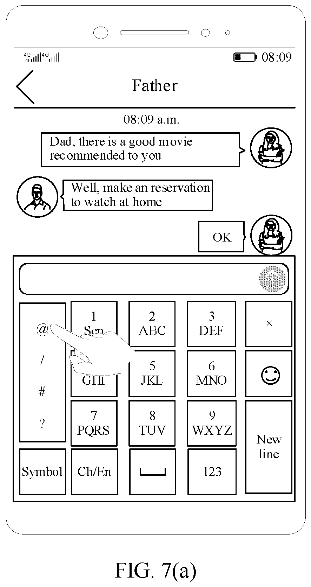

With reference to the GUIs in FIG. 3(a) to FIG. 6(g), the foregoing describes a process in which a user delivers an instruction to another device under a same account in a chat process. With reference to FIG. 7(a) to FIG. 8(f), the following describes a process in which a user delivers an instruction to devices under different accounts in a chat process.

FIG. 7(a) to FIG. 7(e) show still another group of GUIs according to an embodiment of this application.

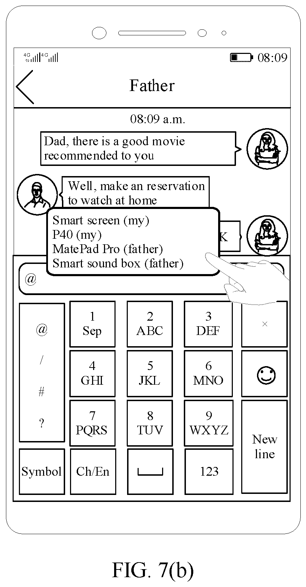

Refer to a GUI shown in FIG. 7(a). The GUI is a chat interface between the daughter and the father. When the daughter needs to send an instruction to another device in the chat interface, the daughter may first enter "@" to select the corresponding device. When detecting that the user taps "@", the mobile phone may display a GUI shown in FIG. 7(b).

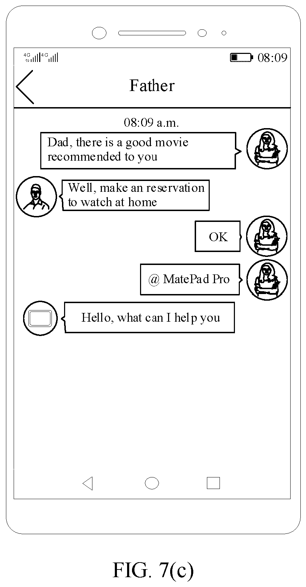

Refer to a GUI shown in FIG. 7(b). The GUI is another chat interface between the daughter and the father. When the mobile phone detects that the user taps "@", the mobile phone may display a device list, where the device list includes the daughter's devices (a smart screen and a P40) and the father's devices (a MatePad Pro and a smart sound box). When detecting an operation of selecting the MatePad Pro by a user, the mobile phone may display a GUI shown in FIG. 7(c).

In an embodiment, the device of the father displayed in the device list may be all devices that have an intelligence capability and that are under the account of the father, or may be a device that has an intelligence capability and that is authorized by the account of the father to the daughter for use.

In an embodiment, after the daughter enters "@" in the text input box in the chat interface between the daughter and the current contact, the mobile phone may display the device of the daughter and the device of the current contact (or the device authorized by the current contact to the daughter). For example, in a chat interface between the daughter and the father, after "@" is entered in the text input box, the mobile phone may display the device of the daughter and the device of the father. For another example, in a chat interface between the daughter and the mother, after "@" is entered in the text input box, the mobile phone may display the device of the daughter and the device of the mother.

In an embodiment, in a chat interface between the daughter and the current contact, after "@" is entered in the text input box, the mobile phone may display the device of the daughter and the device authorized by another account to the daughter for use. For example, the father authorizes, by using the account of the father, the daughter to use the MatePad Pro and the smart sound box, and the mother authorizes, by using an account of the mother, the daughter to use a notebook computer (for example, a MateBook X). In this case, in the chat interface shown in FIG. 7(b), after detecting that the user enters "@", the mobile phone may display the device list. The device list includes devices (the smart screen and the P40) of the daughter, devices (the MatePad Pro and the smart sound box) of the father, and devices (the MateBook X) of the mother.

Refer to a GUI shown in FIG. 7(c). The GUI is another chat interface between the daughter and the father. When the mobile phone detects an operation of selecting the MatePad Pro by the user, the mobile phone may display, in the chat interface, text information "@MatePad Pro" sent by the daughter, and at the same time, the mobile phone may send an instruction to the MatePad Pro. If the MatePad Pro is in a non-wake-up state, the instruction may be used to wake up the MatePad Pro; or if the MatePad Pro is in a wake-up state, the instruction may be used to indicate that the user wants to interact with the MatePad Pro by using the mobile phone.

For example, if the MatePad Pro is in a non-wake-up state when receiving the instruction, the MatePad Pro performs a wake-up operation when receiving the instruction, and sends an execution result of the instruction to the mobile phone. The execution result includes text information such as "Hello, what can I help you?" After receiving the text information, the mobile phone displays the text information "Hello, what can I help you?" replied MatePad Pro by using the chat interface.

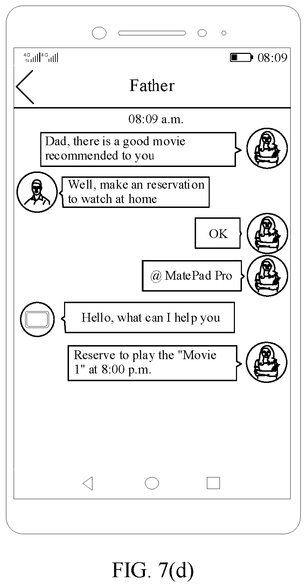

Refer to a GUI shown in FIG. 7(d). The GUI is another chat interface between the daughter and the father. When the mobile phone detects an operation that the user sends text information "Reserve to play the "Movie 1" at 8:00 p.m.", the mobile phone may send an instruction to the MatePad Pro, where the instruction includes the text information. After receiving the text information, the MatePad Pro may analyze the user intent and the slot information in the text information. For a specific analysis process, refer to the description in the foregoing embodiment. For brevity, details are not described herein again. After determining the user intent and the slot information, the MatePad Pro may reserve to play the "Movie 1" at 8:00 p.m. for the user.

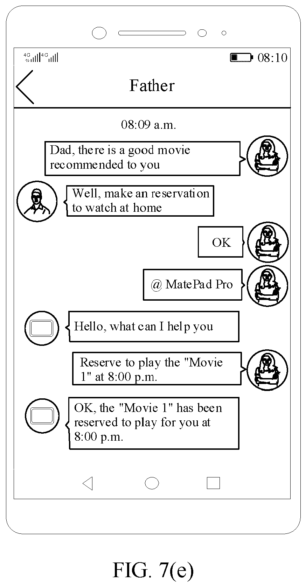

Refer to FIG. 7(e). The GUI is another chat interface between the daughter and the father. The MatePad Pro may further send an execution result of the instruction to the mobile phone, where the execution result includes the text information. After receiving the text information, the mobile phone may display, in the chat interface, the text information "OK, the "Movie 1" has been reserved to play for you at 8:00 p.m." replied by the MatePad Pro.

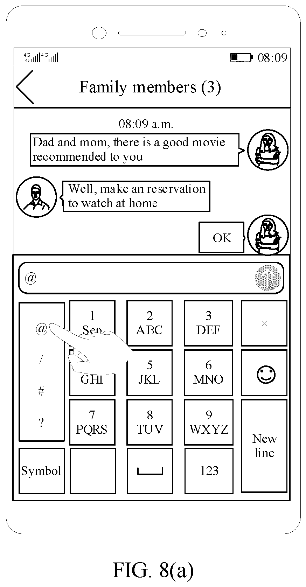

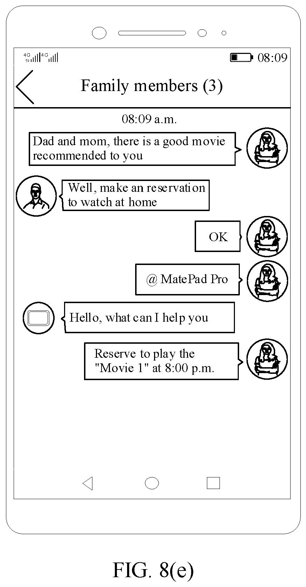

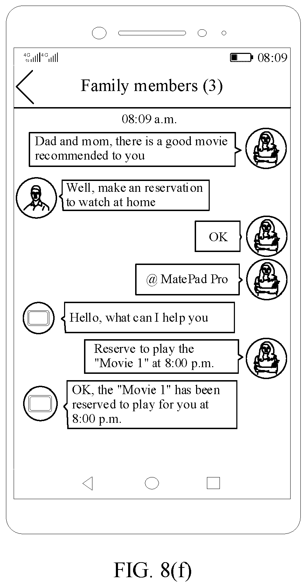

FIG. 8(a) to FIG. 8(f) show still another group of GUIs according to an embodiment of this application.

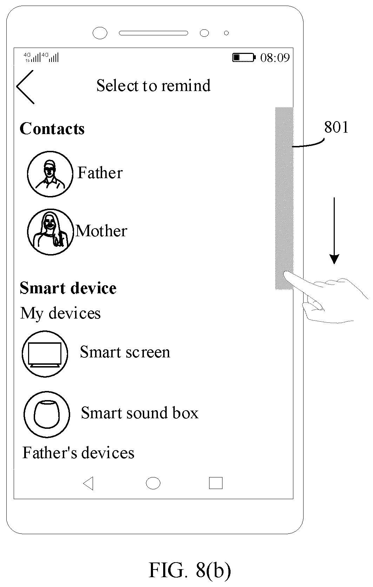

Refer to a GUI shown in FIG. 8(a). The GUI is a chat interface of the group. When the daughter needs to send an instruction to another device in the chat interface, the daughter may first enter "@" to select the corresponding device. When detecting that the user taps "@", the mobile phone may display a GUI shown in FIG. 8(b).

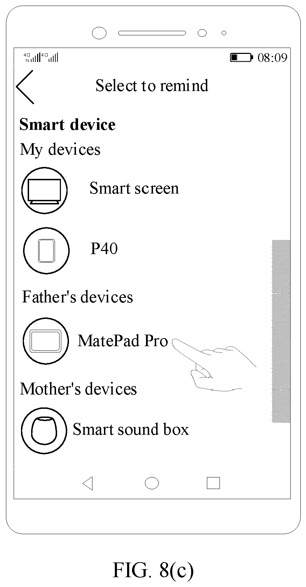

Refer to a GUI shown in FIG. 8(b). The GUI is a display interface of contacts and smart devices that need to be reminded. After the mobile phone detects an operation of entering "@" in the text input box by the user, the mobile phone may display the display interface, where the display interface includes the contacts and the smart devices. The contacts that need to be reminded include the father and the mother. The smart devices that need to be reminded include the device of the daughter, the default of the father, and the device of the mother. After the mobile phone detects an operation of scrolling down a slider bar 801 by the user, the mobile phone may display a GUI shown in FIG. 8(c).

In an embodiment, a device (for example, the device of the father and the device of the mother) of another contact in the device list of the smart devices that need to be reminded may be all devices that have an intelligence capability and that are under an account of the another contact; or may be a device that has an intelligence capability and that is authorized by the account of the another contact to the daughter for use; or may be a device that has an intelligence capability that is added by the another contact to app 1 and that can be used by another member in the group.

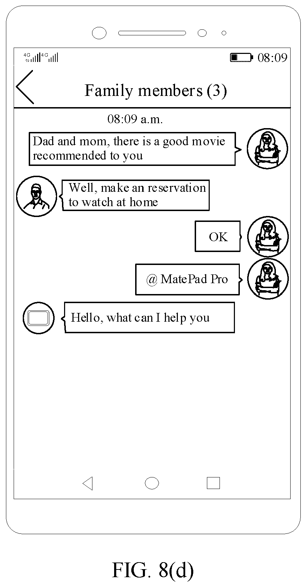

Refer to a GUI shown in FIG. 8(c). The GUI is another display interface of contacts and smart devices that need to be reminded. After detecting an operation of selecting the MatePad Pro by a user, the mobile phone may display a GUI shown in FIG. 8(d).

Refer to a GUI described in FIG. 8(d). The GUI is another chat interface of the group. After the mobile phone detects an operation of selecting the MatePad Pro by the user, the mobile phone may display, in the chat interface, text information "@MatePad Pro" sent by the daughter, and at the same time, the mobile phone may send an instruction to the MatePad Pro. For a process in which the MatePad Pro executes the instruction, refer to the foregoing embodiment. For brevity, details are not described herein again.

The MatePad Pro may send an execution result to the mobile phone. The execution result contains text information "Hello, what can I help you?" The mobile phone may display the text information replied by the MatePad Pro. When the mobile phone detects that the user sends text information "Reserve to play the "Movie 1" at 8:00 p.m.", the mobile phone may send an instruction to the MatePad Pro, where the instruction includes the text information "Reserve to play the "Movie 1" at 8:00 p.m.". After receiving the instruction, the MatePad Pro may analyze user intent and slot information in the instruction. For an analysis process of the MatePad Pro, refer to the foregoing embodiment. For brevity, details are not described herein again.

The MatePad Pro may send an execution result to the mobile phone, where the execution result includes text information "OK, the "Movie 1" has been reserved to play for you at 8:00 p.m." The mobile phone may display the text information replied by the MatePad Pro.

In this embodiment of this application, the user may deliver an instruction to a device of another user. This avoids a process in which the user returns to the vicinity of the device to deliver the instruction, makes the smart assistant of the device humanized, and more easily completes control on the smart assistant in a chat process, thereby helping improve user experience. For example, a Huawei account of the father has logged in on the MatePad Pro, but the father does not know how to deliver instructions to the MatePad Pro. If the father authorizes the daughter to use the MatePad Pro, the daughter can help the father deliver instructions to the MatePad Pro. For another example, a Huawei account of the mother has logged in on the smart sound box, but the mother does not know how to deliver instructions to the smart sound box. If the mother authorizes the daughter to use the smart sound box, the daughter may deliver an instruction to the smart sound box of the mother in a chat interface, for example, helping the mother set an alarm for taking medicine at 10 p.m. In this way, a process in which the daughter teaches the father and the mother to use a device is avoided, and learning costs of the user are saved, thereby helping improve user experience.

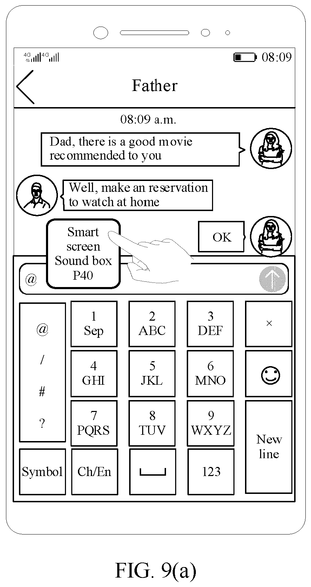

FIG. 3(a) to FIG. 8(f) are described by using an example in which the user first enters "@smart screen" and then enters an instruction. As shown in FIG. 9(a) to FIG. 9(d), the user may also enter "@smart screen" and an instruction together.

FIG. 9(a) to FIG. 9(d) show still another group of GUIs according to an embodiment of this application.

Refer to a GUI shown in FIG. 9(a). The GUI is a chat interface between the daughter and the father. After detecting that the user enters "@" in a text input box, the mobile phone may display a device list, where the device list includes a smart screen, a sound box, and a P40. After the mobile phone detects an operation of selecting the smart screen by the user, the mobile phone may continue to enter, after "@smart screen", an instruction sent to the smart screen.

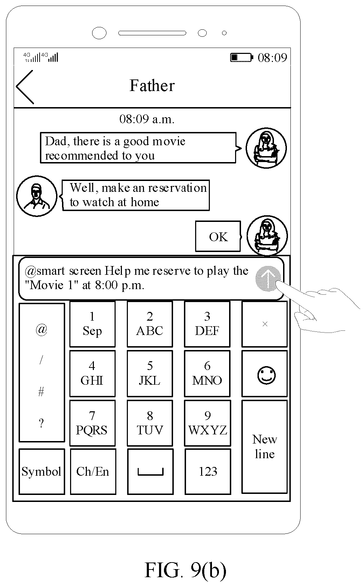

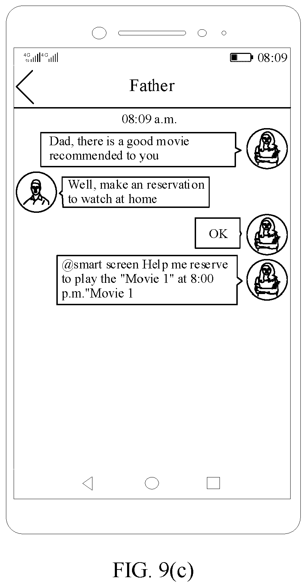

Refer to a GUI shown in FIG. 9(b). The GUI is another chat interface between the daughter and the father. The user enters "@smart screen Help me reserve to play the "Movie 1" at 8:00 p.m." in the text input box. After the mobile phone detects an operation that the user enters the foregoing content in the text input box and taps the sending control, the mobile phone may display a GUI shown in FIG. 9(c).

In this embodiment of this application, in the GUI shown in FIG. 3(e), after the mobile phone detects an operation of selecting the smart screen by the user, the mobile phone may directly display, in the chat interface, that the user replies with "@smart screen". In this case, the user does not need to tap the sending control. For the GUI shown in FIG. 9(a), after detecting the operation of selecting the smart screen by the user, the mobile phone may display "@smart screen" in the text input box (in this case, the text information is not sent out), and the user may then edit, in the text input box, other text information that needs to be sent to the smart screen. After the mobile phone detects that the user taps the sending control, the mobile phone sends the content edited in the text input box.

Refer to a GUI shown in FIG. 9(c). The GUI is another chat interface between the daughter and the father. After detecting an operation that the user taps the sending control, the mobile phone may display the text information "@smart screen Help me reserve to play the "Movie 1" at 8:00 p.m." sent by the daughter. In this case, the mobile phone may send an instruction to the smart screen, where the instruction includes the text information "Help me reserve to play the "Movie 1" at 8:00 p.m.". The smart screen may analyze user intent and slot information to reserve to play the "Movie 1" at 8:00 p.m. for the user. For a specific analysis process, refer to the description in the foregoing embodiment. For brevity, details are not described herein again. After the smart screen makes a reservation to play the "Movie 1" for the user at 8:00 p.m., the smart screen may send, to the mobile phone, an execution result of the instruction, where the execution result includes text information "OK, the "Movie 1" has been reserved to play for you at 8:00 p.m.".

In an embodiment, if the smart screen is in a non-wake-up state when receiving the instruction, the smart screen may enter a wake-up state when receiving the instruction, and execute the instruction after entering the wake-up state.

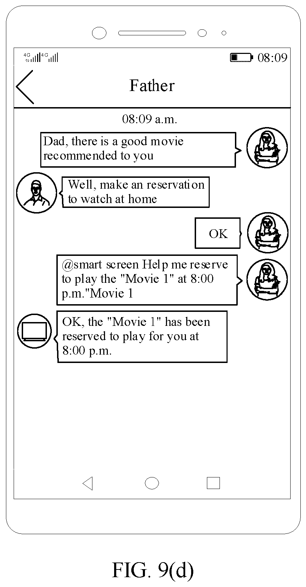

Refer to a GUI shown in FIG. 9(d). The GUI is another chat interface between the daughter and the father. After the mobile phone receives a result of executing the instruction by the smart screen, the mobile phone may display, in the chat interface, the content "OK, the "Movie 1" has been reserved to play for you at 8:00 p.m." replied by the smart screen.

In this embodiment of this application, the user may directly enter a corresponding instruction after performing an @ operation on a corresponding smart device, so that the mobile phone may send the corresponding instruction to the smart device. In this way, the instruction may be quickly delivered to the smart device, a quantity of interactions between the mobile phone and the smart device is reduced, and efficiency of interactions between the user and the smart device is improved.

In an embodiment, the user may also enter "@smart sound box@P40 Help me set an alarm at 10 a.m." in the text input box. When the mobile phone detects an operation that the user taps the sending control, the mobile phone may display, in a chat interface, the text information "@smart sound box@P40 Help me set an alarm at 10 a.m." sent by the daughter. In addition, the mobile phone may send an instruction to the smart sound box and the P40, where the instruction may carry the text information "Help me set an alarm at 10:00 a.m.".

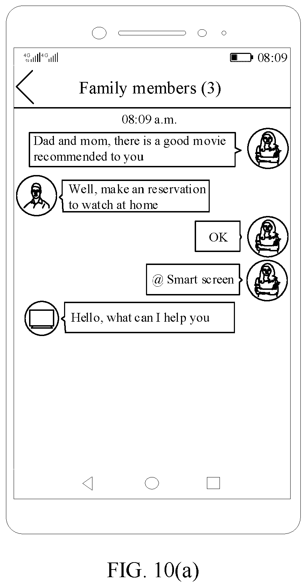

FIG. 10(a) to FIG. 10(c) show still another group of GUIs according to an embodiment of this application.

Refer to a GUI shown in FIG. 10(a). The GUI is a chat interface of the group. After the mobile phone detects an operation of selecting the smart screen by the user, the mobile phone may display, in the chat interface, text information "@smart screen" sent by the daughter. In this case, the mobile phone may send an instruction to the smart screen. For a process in which the smart screen executes the instruction, refer to the description in the foregoing embodiment. For brevity, details are not described herein again. The smart screen may send an execution result of the instruction to the mobile phone. The execution result may include text information such as "Hello, what can I help you?" After receiving the execution result sent by the smart screen, the mobile phone displays, on the chart screen, the text information "Hello, what can I help you?".

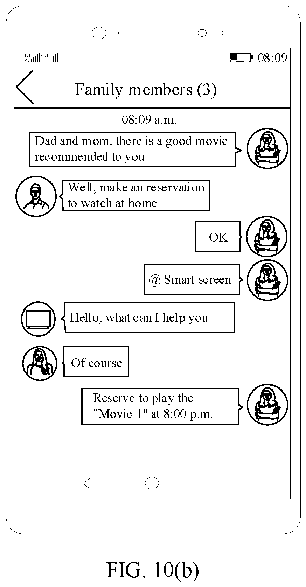

Refer to a GUI shown in FIG. 10(b). The GUI is another chat interface of the group. Before the daughter replies "Reserve to play the "Movie 1" at 8:00 p.m.", the mother replies "Of course" in the chat interface. In this case, when detecting that a user sends text information "Of course" in the chat interface, the mobile phone sends an instruction to the smart screen, where the instruction includes the text information "Of course". When receiving the text information, the smart screen may determine that the text information does not include user intent and slot information, so that the smart screen may ignore the text information.

When the mobile phone detects that the user then sends the text information "Reserve to play the "Movie 1" at 8:00 p.m." in the chat interface, the mobile phone may send another instruction to the smart screen, where the another instruction includes the text information "Reserve to play the "Movie 1" at 8:00 p.m.". The smart screen may analyze user intent and slot information to reserve to play the "Movie 1" at 8:00 p.m. for the user. For a specific analysis process, refer to the description in the foregoing embodiment. For brevity, details are not described herein again. After the smart screen makes a reservation to play the "Movie 1" for the user at 8:00 p.m., the smart screen may send, to the mobile phone, an execution result of the instruction, where the execution result includes text information "OK, the "Movie 1" has been reserved to play for you at 8:00 p.m.".

In an embodiment, when detecting that the user sends the text information in the chat interface, the mobile phone may analyze the user intent and the slot information in the text information. If the mobile phone determines that the text information includes the user intent and the slot information, the mobile phone may forward the user intent and the slot information to the smart screen. For example, when the mobile phone detects that the user sends the text information "Of course" in the chat interface, the mobile phone may determine that the text information does not include the user intent and the slot information, and the mobile phone may not send an instruction to the smart screen. When the mobile phone detects that the user sends the text information "Reserve to play the "Movie 1" at 8:00 p.m." in the chat interface, the mobile phone may determine that the text information includes the user intent and the slot information, in this case, the mobile phone may send, to the smart phone, the user intent and the slot information that are obtained through analysis by the mobile phone, so that the smart phone may perform a corresponding operation based on the user intent and the slot information.

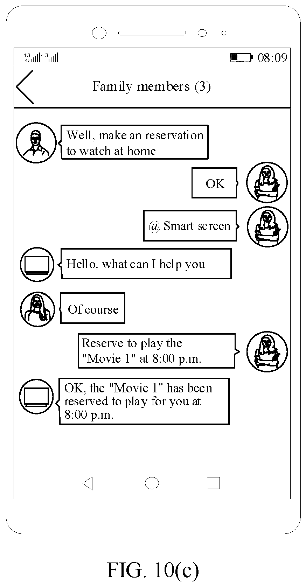

Refer to a GUI shown in FIG. 10(c). The GUI is another chat interface between the daughter and the father. After the mobile phone receives a result of executing the instruction by the smart screen, the smart screen may display, in the chat interface, the content "OK, the "Movie 1" has been reserved to play for you at 8:00 p.m." replied by the smart screen.

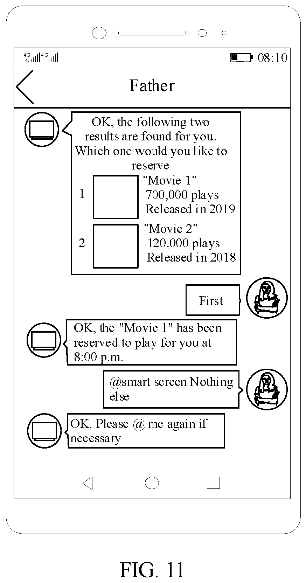

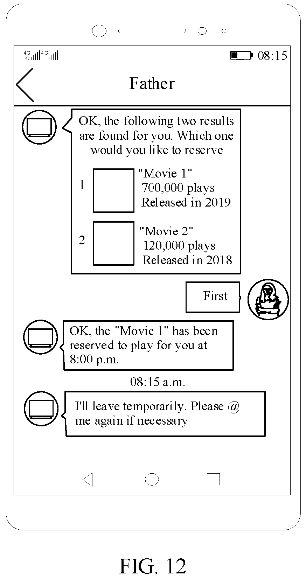

With reference to FIG. 11 and FIG. 12, the following describes two processes in which interaction between a user and a smart device ends.

FIG. 11 shows another GUI according to an embodiment of this application.

Refer to a GUI shown in FIG. 11. The GUI is another chat interface between the daughter and the father. After the mobile phone detects, in the chat interface, that the user sends "@smart screen Nothing else", the mobile phone may send an instruction to the smart screen, where the instruction includes text information "Nothing else". After receiving the instruction, the smart screen may determine that the user expects to end interaction with the smart screen, so that the smart screen may send an execution result of the instruction to the mobile phone, where the execution result includes text information "OK, please @ me again if necessary". When receiving the execution result, the mobile phone may display, in the chat interface, "OK. Please @ me again if necessary" replied by the smart screen.

Refer to a GUI shown in FIG. 12. The GUI is another chat interface between the daughter and the father. If the smart screen does not receive any instruction sent by the mobile phone within preset duration (for example, 5 minutes) when the smart screen sends the text information "OK, the "Movie 1" has been reserved to play for you at 8:00 p.m.", the smart screen may send text information "I'll leave temporarily. Please @ me again if necessary" to the mobile phone when the preset duration ends. When receiving an instruction from the smart screen, the mobile phone may display, in the chat interface, "I'll leave temporarily. Please @ me again if necessary" replied by the smart screen.

It should be noted that in FIG. 11 and FIG. 12, an example in which an interaction ending condition is that the mobile phone receives an interaction ending instruction from the user and the mobile phone does not receive an instruction from the user within a preset time is used for description. It may be understood that the interaction ending condition may alternatively be that the smart screen receives, within the preset time, an instruction sent by the mobile phone, or the like. This is not limited in this embodiment of this application.

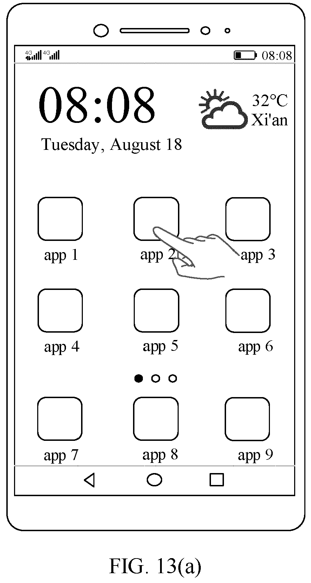

With reference to the GUIs in FIG. 3(a) to FIG. 12, the foregoing describes a process in which a user interacts with a smart device in a chat interface in the embodiments of this application. With reference to FIG. 13(a) to FIG. 15(e), the following describes a process of sharing a smart device between users.

FIG. 13(a) to FIG. 13(h) show a group of GUIs according to an embodiment of this application.

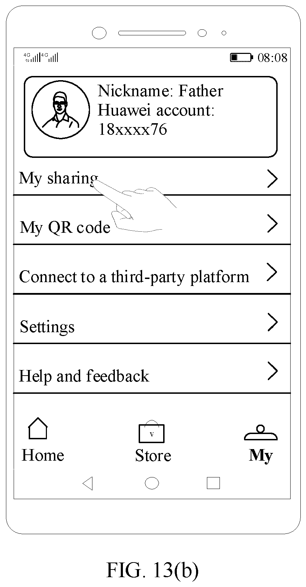

Refer to FIG. 13(a). The GUI is a desktop of a mobile phone. The home screen of the mobile phone includes icons of a plurality of applications (app 1 to app 9). When the mobile phone detects an operation that a user taps an icon of app 2, the mobile phone may open app 2, and display a GUI shown in FIG. 13(b).

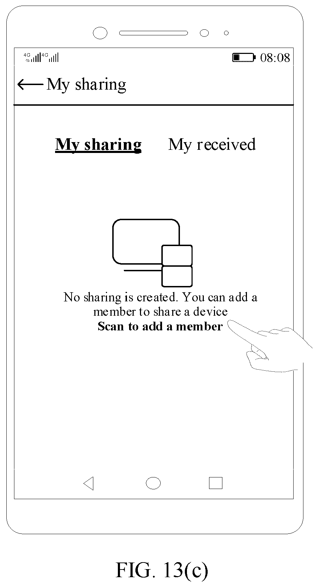

Refer to a GUI shown in FIG. 13(b). The GUI is a display interface of app 2. App 2 may be a device management application. The display interface displays that the currently logged-in Huawei account is 18xxxxx76 and a nickname of the user is Father. When the mobile phone detects an operation that the user taps "My Sharing", the mobile phone may display a GUI shown in FIG. 13(c).

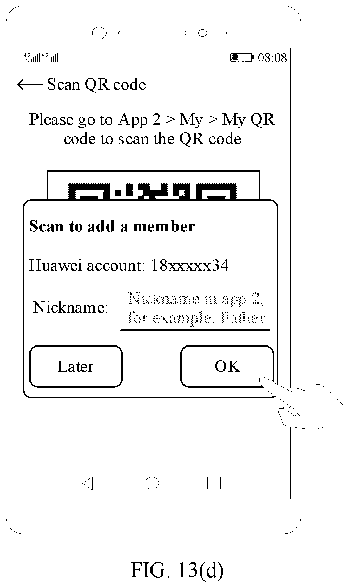

Refer to a GUI shown in FIG. 13(c). The GUI is a display interface of a shared device. The display interface includes a device shared by the user with another contact and a device shared by the another contact with the user and accepted by the user. The display interface displays "No sharing is created. You can add a member to share a device". When the mobile phone detects an operation that the user taps "Scan to add a member", the mobile phone may display a GUI shown in FIG. 13(d).

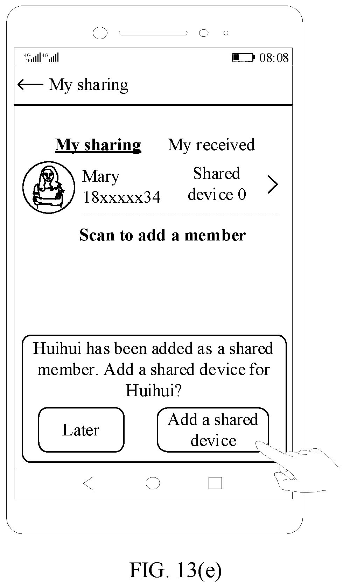

Refer to a GUI shown in FIG. 13(d). The GUI is an interface for scanning a QR code. The user may use the mobile phone to scan a QR code of another contact to share the device with the contact after adding the contact. As shown in FIG. 13(d), after scanning a QR code of contact 18xxxxx34 by using the mobile phone, a reminder box for adding a member by scanning the QR code may be displayed, where the reminder box includes the Huawei account 18xxxxx34 of the contact. When detecting that the user taps a determining control, the mobile phone may display a GUI shown in FIG. 13(e).

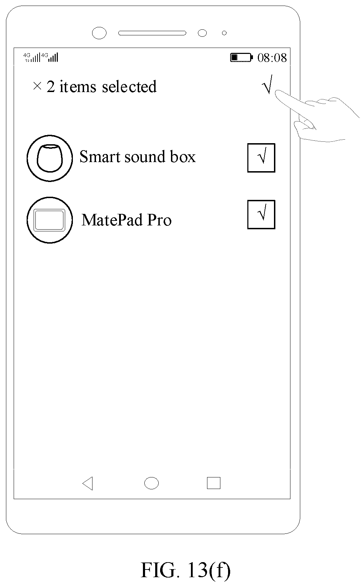

Refer to a GUI shown in FIG. 13(e). The GUI is another display interface of the shared device. After the user adds a contact "Mary" as a shared member, the mobile phone may display a reminder box in the display interface, where the reminder box may prompt the user "Mary has been added as a shared member. Whether to add a shared device for Mary". After the mobile phone detects an operation that the user taps "Add sharing", the mobile phone may display a GUI shown in FIG. 13(f).

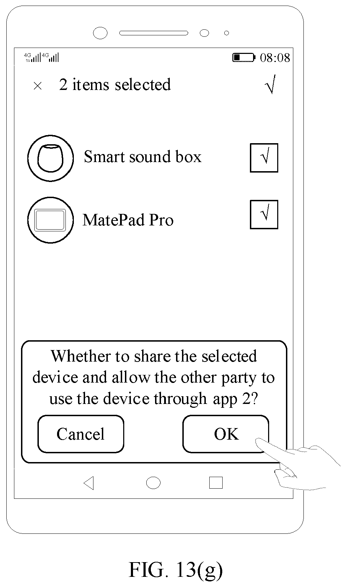

Refer to a GUI shown in FIG. 13(f). The GUI is an interface for shared device selection. After the mobile phone detects an operation that the user selects the smart sound box and the MatePad Pro and taps the determining control, the mobile phone may display a GUI shown in FIG. 13(g).

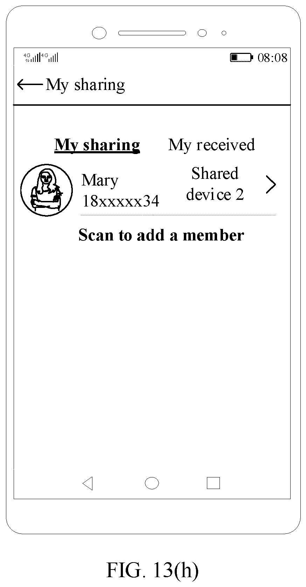

Refer to a GUI shown in FIG. 13(g). The GUI is an interface for shared device selection. The mobile phone may prompt, by using a reminder box, the user "Whether to share the selected device and allow the other party to use the device through app 2". When the mobile phone detects that the user taps the determining control, the mobile phone may display a GUI shown in FIG. 13(h).

Refer to a GUI shown in FIG. 13(h). The GUI is another display interface of the shared device. The interface displays that the user shares two devices with the contact Mary.

In an embodiment, if both app 1 and app 2 on the mobile phone are logged in to by using a same account (for example, the Huawei account of the father), data may be shared between app 1 and app 2 by using a server. For example, the father shares the smart sound box and the MatePad Pro with the contact Mary (the daughter of the father) by using a mobile phone. In this case, the mobile phone may send a Huawei account of the contact Mary and a device (the smart sound box and the MatePad Pro) of the father to the server, so that the device of the father is bound to the account of the daughter on the server. After binding the device of the father to the account of the daughter, the server may further send, to the device of the daughter (for example, a mobile phone of the daughter), information about the device shared by the father. In this way, information about the device of the father is stored in the device of the daughter. For example, as shown in FIG. 7(b), after the mobile phone of the daughter detects that the user enters "@", the mobile phone may display information about the device of the father in the device list.

In an embodiment, after the father shares two devices of the father with the daughter by using the Huawei account of the father, if a new device is added to the Huawei account of the father, the new device may be automatically added to the daughter (or the new device may be automatically authorized to the daughter for use).

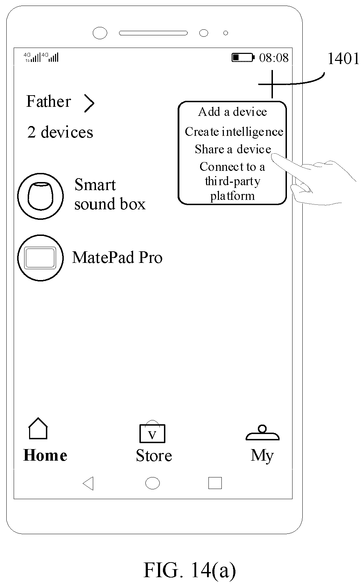

FIG. 14(a) to FIG. 14(d) show a group of GUIs according to an embodiment of this application.

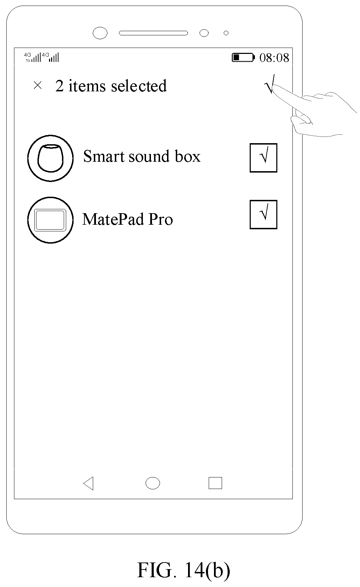

Refer to a GUI shown in FIG. 14(a). The GUI is another display interface of app 2. When detecting an operation that the user taps a control 1401, the mobile phone may display a function list, where the function list includes functions such as adding a device, creating intelligence, sharing a device, and connecting to a third-party platform. When the mobile phone detects an operation that the user taps the shared device, the mobile phone may display a GUI shown in FIG. 14(b).

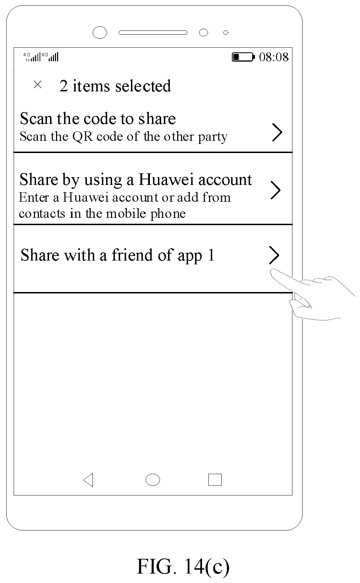

Refer to a GUI shown in FIG. 14(b). The GUI is an interface for shared device selection. After the mobile phone detects an operation that the user selects the smart sound box and the MatePad Pro and taps the determining control, the mobile phone may display a GUI shown in FIG. 14(c).

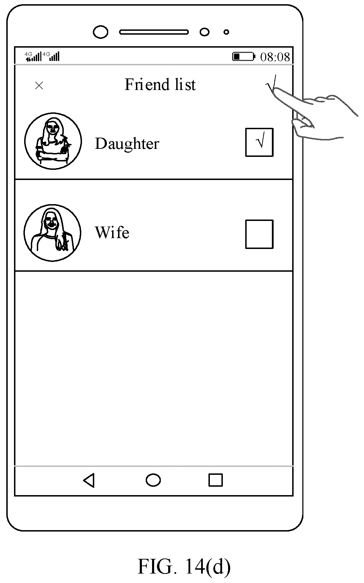

Refer to a GUI shown in FIG. 14(c). The GUI is a display interface of a plurality of device sharing manners. The user can share a device by scanning a QR code, sharing a device with a Huawei account, or sharing a device with a friend of app 1. When the mobile phone detects an operation that the user taps to share with a friend of app 1, the mobile phone may display a GUI shown in FIG. 14(d).

Refer to a GUI shown in FIG. 14(d). The GUI is a friend list display interface of app 1. The friend list includes friend information of the user in app 1. When the mobile phone detects that the user selects the daughter and taps the determining control, the mobile phone may share the smart sound box and the MatePad Pro with the daughter of the contact in app 1. For example, as shown in FIG. 7(b), after the mobile phone of the daughter detects that the user enters "@", the mobile phone may display information about the device of the father in the device list.

In an embodiment, after the father shares the two devices with the daughter by using the Huawei account of the father, the two devices may be displayed only in the chat interface between the father and the daughter. It can also be displayed on all chat interfaces between the daughter and the father. For example, the father shares the smart sound box and the MatePad Pro with the daughter. In this case, in the chat interface between the daughter and the father, when the mobile phone detects that the user taps "@", the smart sound box and the MatePad Pro may be displayed in the device list. For another example, in a group chat interface of the daughter, the father, and the mother, when detecting that the user taps "@", the mobile phone may display the smart sound box and the MatePad Pro in device information that needs to be reminded. However, in a chat interface between the daughter and another contact (the other contacts do not include the father), a device shared by the father to the daughter may not be displayed.

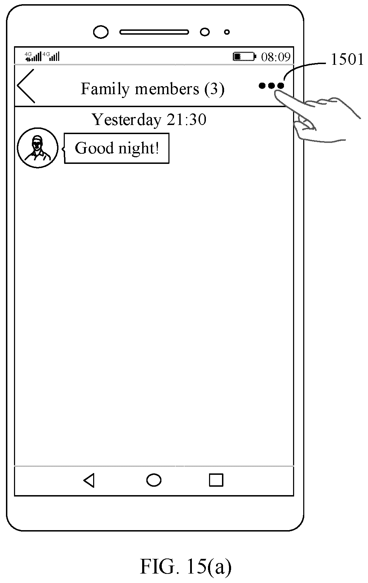

FIG. 15(a) to FIG. 15(e) show a group of GUIs according to an embodiment of this application.

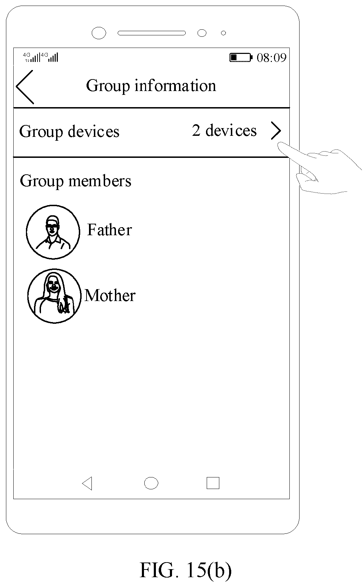

Refer to a GUI shown in FIG. 15(a). The GUI is a chat interface of the group. When the mobile phone detects an operation that the user taps a control 1501, the mobile phone may display a GUI shown in FIG. 15(b).

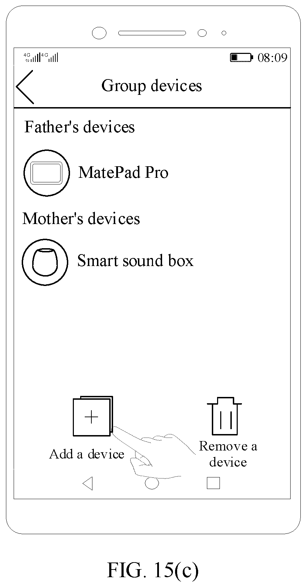

Refer to a GUI shown in FIG. 15(b). The GUI is an interface for displaying group information. The display interface includes information about group devices and group members, where the group devices include devices shared by all group members in the group (there are two devices in the current group devices), and the devices in the group devices allow all members in the group to perform control. When the mobile phone detects an operation that the user taps a group device, the mobile phone may display a GUI shown in FIG. 15(c).

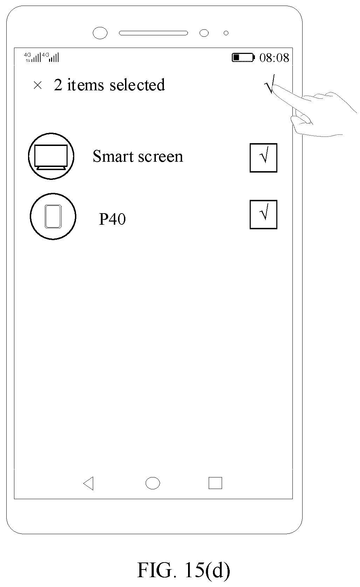

Refer to a GUI shown in FIG. 15(c). The GUI is a display interface of the group devices. The display interface displays that the current group devices include the MatePad Pro shared by the father and the smart sound box shared by the mother. When the mobile phone detects that the user taps a control for adding a device, the mobile phone may display a GUI shown in FIG. 15(d).

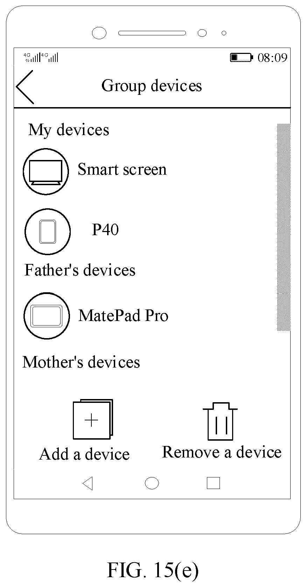

Refer to a GUI shown in FIG. 15(d). The GUI is an interface for shared device selection. After the mobile phone detects that the user selects the smart screen and the P40 and taps the determining control, the mobile phone may display a GUI shown in FIG. 15(e).

Refer to a GUI shown in FIG. 15(e). The GUI is another display interface of the group devices. The display interface displays that two devices (the smart screen and the P40) shared by the user are added to the current group devices.

In an embodiment, after the daughter shares devices (the smart screen and the P40) of the daughter in the group devices, in the chat interface between the mother and the daughter, if the mother enters "@" in the text input box, the smart screen and the P40 may be displayed in the device list. In the chat interface between the father and the daughter, if the father enters "@" in the text input box, the smart screen and the P40 may be displayed in the device list.

With reference to FIG. 3(a) to FIG. 15(e), the foregoing describes that when a user needs a smart assistant of a smart device in a chat process, there is a way to deliver an instruction to the smart assistant of the smart device, and the smart assistant of the smart device is humanized, so that control on the smart assistant of the smart device is more easily completed in the chat process. The following describes a method for controlling a device in the embodiments of this application with reference to method embodiments.

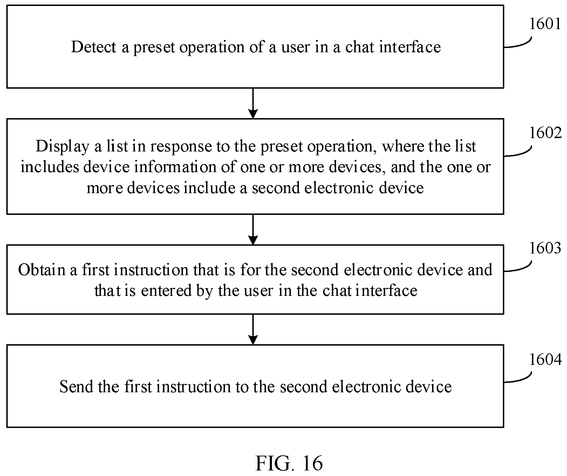

FIG. 16 is a schematic flowchart of a method 1600 for controlling a device according to an embodiment of this application. The method may be executed by a first electronic device, and the method includes:

S1601. The first electronic device detects a preset operation of a user in a chat interface of an instant messaging application.

For example, the instant messaging application may be the foregoing app 1.

In an embodiment, the preset operation may be an operation that the first electronic device detects an operation of entering "@" in a text input box by the user.

In an embodiment, the preset operation may be that the first electronic device detects a preset gesture (for example, three-finger sliding) of the user in the chat interface.

In an embodiment, the chat interface includes a one-to-one chat interface of two members and a group chat interface of three or more members.

For example, the GUI shown in FIG. 3(c) is a one-to-one chat interface of two members (a daughter and a father).

For example, the GUI shown in FIG. 6(b) is a group chat interface of three members (the daughter, a mother, and the father).

It should be understood that the chat interface in this embodiment of this application is not limited to the chat interfaces shown in FIG. 6(b) to FIG. 6(c). The chat interface may also include display interfaces of member information and device list shown in FIG. 6(d) or FIG. 8(b) to FIG. 8(c).

S1602. The first electronic device displays a list in the chat interface in response to the preset operation, where the list includes device information about one or more devices, and the one or more devices include a second electronic device.

In an embodiment, the one or more devices are associated with a first account, and the first account is a logged-in account on the instant messaging application (for example, app 1).

In an embodiment, the one or more devices include a device that has an intelligence capability and that is under the first account.

For example, referring to FIG. 3(e), after a mobile phone detects that the user enters "@" in the text input box, the mobile phone may display a device list, where the device list includes a smart screen, a sound box, and a P40. The smart screen, the sound box, and the P40 are devices that have an intelligence capability and that are under the Huawei account (a Huawei account of the daughter) logged in on the mobile phone.

In an embodiment, the one or more devices further include a device that has an intelligence capability and that is authorized, by using a second account, to the first account for use.

For example, referring to FIG. 7(b), after the mobile phone detects that the user enters "@" in the text input box, the mobile phone may display a device list, where the device list includes devices (the smart screen and the P40) of the daughter and devices (a MatePad Pro and the smart sound box) of the father. A currently logged-in account on the mobile phone is the Huawei account of the daughter, the devices of the daughter are devices that have an intelligence capability and that are under the Huawei account of the daughter, and the devices of the father are devices shared with the Huawei account of the daughter by using the Huawei account of the father.

For example, referring to FIG. 8(c), the smart device list of the group includes devices of the daughter, a device of the father, and a device of the mother. The device of the father may be a device shared by using the Huawei account of the father to all members in the group for use, and the device of the mother may be a device shared by using the Huawei account of the mother to all members in the group for use.

In an embodiment, the second account includes an account of a chat object of a user corresponding to the first account in the chat interface.

For example, as shown in FIG. 7(b), the first account may be a Huawei account 1 of the daughter, and the second account may be a Huawei account 2 of the father.

For example, as shown in FIG. 8(b), the first account may be the Huawei account 1 of the daughter, and the second account may include the Huawei account 2 of the father and a Huawei account 3 of the mother.

In an embodiment, the instant messaging application may be an application authorized by the first account.

For example, the instant messaging application is WeChat (for example, a currently logged-in account on WeChat is a WeChat account 1), the first account is the Huawei account 1, and a device displayed in the list may be a device that is authorized, by using the Huawei account 1, to the WeChat account 1 for use.

For example, if the preset operation may be that the first electronic device detects the preset gesture of the user in the chat interface, the first electronic device may listen to a touch control event in the chat interface. When the first electronic device detects an operation that the user opens app 1, the first electronic device displays a home screen of app 1 (as shown in FIG. 3(b)). When the first electronic device detects that the user taps a chat record of a contact (for example, the father) on the home screen, the first electronic device displays a chat interface with the contact. When the first electronic device displays a chat interface, the first electronic device may start to listen to a touch control event. If the first electronic device detects a preset gesture (for example, three-finger sliding) of the user in the chat interface through listening, the first electronic device may display a list. For example, the first electronic device is an Android system, and the first electronic device may use a listening manner such as OnTouchListener or GestureDetector.

In an embodiment, the list may include device information of one or more devices. For example, the list may be a list shown in FIG. 3(e), and the list includes device information (the smart screen, the sound box, and the P40) of a plurality of devices.

In an embodiment, the list may include device information of one or more devices and member information. For example, the list may be a list shown in FIG. 6(d), and includes member information in the group and device information of one or more devices.

S1603. The first electronic device obtains a first instruction that is for the second electronic device and that is entered by the user in the chat interface.

In an embodiment, before the first electronic device obtains a first instruction that is for the second electronic device and that is entered by the user in the chat interface, the method further includes: The first electronic device detects an operation that the user selects the second electronic device from the list.

In an embodiment, the chat interface is a one-to-one chat interface of two members. When the first electronic device detects the preset operation of the user, the first electronic device may display the list in the chat interface. For example, if the preset operation is that the user enters "@" in the text input box, the first electronic device may display the list in an "@" attachment.

In an embodiment, the chat interface is a group chat interface of three or more members. The first electronic device may display a first chat interface of the instant messaging application. When the first electronic device detects the preset operation of the user in the first chat interface, the first electronic device may display a second chat interface, where the second chat interface includes the list (for example, the list may include member information and device information of one or more devices). When the first electronic device detects, in the second chat interface, an operation that the user selects the second electronic device from the list, the first electronic device jumps from the second chat interface to the first chat interface. The first electronic device obtains, in the first chat interface, the first instruction that is sent by the user to the second electronic device.

In an embodiment, the first instruction may be an instruction including a user intent. For example, when the first electronic device detects that the user sends text information "Reserve to play the "Movie 1" at 8:00 p.m.", the first electronic device may send the first instruction to the second electronic device, where the first instruction includes the user intent "reserve a movie".

For example, as shown in FIG. 3(g), the first instruction may be text information "Reserve to play Ne Zha at 8:00 p.m." sent by the daughter.

For example, as shown in FIG. 6(f), the first instruction may be text information "Reserve to play the "Movie 1" at 8:00 p.m." sent by the daughter.

For example, as shown in FIG. 9(c), the first instruction may be text information "@smart screen Help me reserve to play the "Movie 1" at 8:00 p.m." sent by the daughter.

In an embodiment, the first electronic device may first detect that the user selects the second electronic device, and then detect an operation of entering the first instruction by the user. When detecting an operation of selecting the second electronic device by the user, the first electronic device may directly display "@second electronic device" in the chat interface. In this case, the first electronic device may send a second instruction to the second electronic device, where the second instruction is used to wake up the second electronic device, or the second instruction is used to request to interact with the second electronic device by using the first electronic device. For example, in FIG. 3(f) and FIG. 3(g), the mobile phone first detects that the user enters "@smart screen". In this case, after detecting that the user enters "@smart screen", the mobile phone may send the second instruction to the smart screen. When detecting that the user sends the text information "Reserve to play Ne Zha at 8:00 p.m.", the mobile phone may send the first instruction to the smart screen, where the first instruction includes the user intent "reserve a movie".

In an embodiment, the first electronic device may simultaneously detect operations of selecting the second electronic device and entering the first instruction by the user. When detecting an operation of selecting the second electronic device by the user, the first electronic device may display "@second electronic device" in the text input box. In this case, the first electronic device does not directly send the content in the text input box. The user may continue to edit, in the text input box, the first instruction that needs to be sent to the second electronic device. When the first electronic device detects an operation that the user taps a sending control, the first electronic device may display, in the chat interface, the content edited by the user in the text input box, and send the first instruction to the second electronic device. For example, as shown in FIG. 9(c), the mobile phone may display, in the chat interface, "@smart screen Help me reserve to play the "Movie 1" at 8:00 p.m.", and the mobile phone may send the first instruction to the smart screen, where the first instruction includes the user intent "reserve a movie". When the second electronic device receives the first instruction, if the second electronic device is in a non-wake-up state, the second electronic device may first enter a wake-up state, and then execute the first instruction.

In an embodiment, the first instruction may include text information or voice information entered by the user.

S1604. The first electronic device sends the first instruction to the second electronic device.

For example, the first electronic device may send the first instruction to the second electronic device by using a network packet. A network protocol includes but is not limited to the Transmission Control Protocol (transmission control protocol, TCP), the User Datagram Protocol (user datagram protocol, UDP), or the Hypertext Transfer Protocol (hyper text transfer protocol, HTTP).

For example, the first electronic device may also send the first instruction to the second electronic device by using a server, so that the server forwards the first instruction to the second electronic device.

For example, the first electronic device may further send the first instruction to the second electronic device by using a short-range wireless communications technology (for example, Bluetooth/Wi-Fi). For example, as shown in FIG. 3(g), if the mobile phone of the daughter and the smart screen are within a preset distance, the mobile phone may add the first instruction to a Bluetooth low energy (Bluetooth low energy, BLE) data packet, and send the Bluetooth low energy data packet to the second electronic device.

In an embodiment, the method further includes: The first electronic device receives a result of executing the first instruction by the second electronic device; and the first electronic device displays the execution result in the chat interface.

For example, after executing the first instruction, the second electronic device may send the execution result to the first electronic device by using a network packet; or the second electronic device may send the execution result to a server, and the server forwards the execution result to the first electronic device; or the second electronic device may send the execution result to the first electronic device by using the short-range wireless communications technology.

For example, as shown in FIG. 3(i), the execution result sent by the smart screen to the mobile phone includes information about the "Movie 1" and the "Movie 2". After receiving the execution result sent by the smart screen, the mobile phone may prompt the user "OK, the following two results are found for you. Which one would you like to reserve?" and information about the "Movie 1" and the "Movie 2".

For example, as shown in FIG. 6(g), the execution result sent by the smart screen to the mobile phone includes text information "OK, the "Movie 1" has been reserved to play for you at 8:00 p.m.". After receiving the execution result sent by the smart screen, the mobile phone may display, in the chat interface, that the smart screen replies "OK, the "Movie 1" has been reserved to play for you at 8:00 p.m.".

In an embodiment, the method further includes: The first electronic device determines whether further interaction exists.

For example, when the first electronic device does not detect, within preset duration starting from displaying the execution result, that the user enters the instruction again, the first electronic device determines that there is no further interaction. In this case, the first electronic device may send the first indication information to the second electronic device, where the first indication information is used to indicate that the first electronic device does not receive the instruction entered by the user again within the preset duration. After receiving the first instruction information, the second electronic device may send reminder information to the first electronic device, where the reminder information is used to prompt the user to perform the preset operation again if the user needs to interact with the second electronic device.

Alternatively, if the second electronic device does not receive, within preset duration, an instruction sent by the first electronic device, the second electronic device may send reminder information to the first electronic device, where the reminder information is used to prompt the user to perform the preset operation again if the user needs to interact with the second electronic device.

For example, as shown in FIG. 12, after receiving the first instruction information sent by the mobile phone, the smart screen may send reminder information "I'll leave temporarily. Please @ me again if necessary" to the mobile phone. After receiving the reminder information, the mobile phone may display "I'll leave temporarily. Please @ me again if necessary" replied by the smart screen.

For example, when the first electronic device detects an interaction ending instruction sent by the user, the first electronic device may determine that there is no further interaction. In this case, the first electronic device may send second instruction information to the second electronic device, where the second instruction information is used to instruct to end interaction with the second electronic device. After receiving the second indication information, the second electronic device may send reminder information to the mobile phone, where the reminder information is used to prompt the user to perform the preset operation again if the user needs to interact with the second electronic device.

For example, as shown in FIG. 11, when the mobile phone detects that the user enters "@smart screen Nothing else", the mobile phone may send the second instruction information to the smart screen. After receiving the second instruction information sent by the mobile phone, the smart screen may send reminder information "OK. Please @ me again if necessary" to the mobile phone. After receiving the reminder information, the mobile phone may display "OK. Please @ me again if necessary" replied by the smart screen.

In an embodiment, after the first electronic device displays the execution result, if the first electronic device detects, in the chat interface, another instruction entered by the user, the first electronic device may continue to send, to a corresponding device, the another instruction entered by the user.

For example, as shown in FIG. 3(i), after the mobile phone prompts, in the chat interface, the user "OK, the following two results are found for you. Which one would you like to reserve?" and information about the "Movie 1" and the "Movie 2", the mobile phone receives text information "First" replied by the user. The mobile phone may send the text information to the smart screen, and after receiving the text information, the smart screen may determine that a movie that the user wants to reserve is the "Movie 1". After making a reservation to play the "Movie 1" at 8:00 p.m., the smart screen sends text information "OK, the "Movie 1" has been reserved to play for you at 8:00 p.m." to the mobile phone. In this way, the mobile phone may display, in the chat interface, the text information "OK, the "Movie 1" has been reserved to play for you at 8:00 p.m." replied by the smart screen.

For example, as shown in FIG. 5(a), the mobile phone displays that the smart screen replies "OK, the "Movie 1" has been reserved to play for you at 8:00 p.m.". If the mobile phone detects that the user enters "@" and detects that the user selects the sound box, the user may continue to interact with the sound box in the chat interface.

If the first electronic device determines that further interaction exists, the first electronic device may continue to send another instruction of the user to the second electronic device. For a process in which the first electronic device sends another instruction to the second electronic device, refer to the foregoing processes of S 1604 to S1607. For brevity, details are not described herein again.

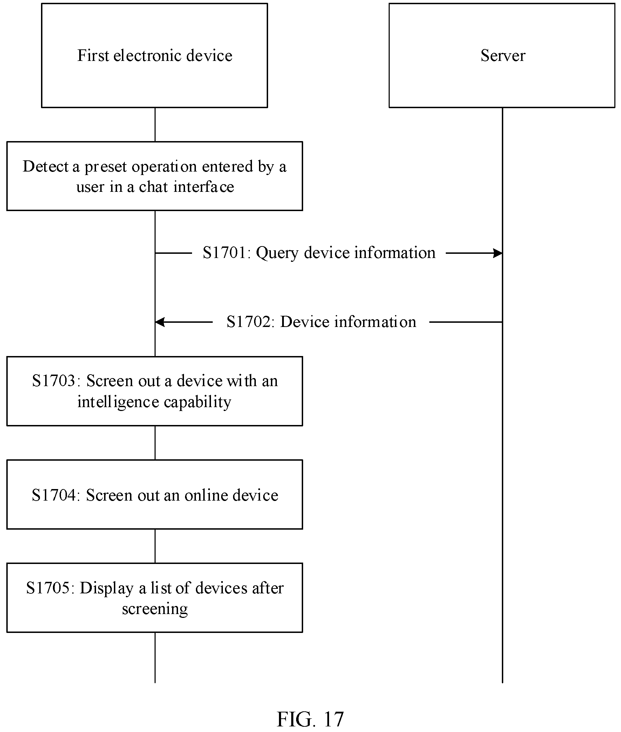

FIG. 17 shows a process in which the first electronic device determines a device in a list according to an embodiment of this application. The process includes the following steps.

S1701. In response to a detected preset operation of a user, the first electronic device requests, from a server, device information of a device associated with a first account.

In an embodiment, the device information includes information such as a device name, a device type, whether an intelligence capability is supported, and whether the device is online.

For example, the first electronic device may send request information to the server, where the request information is used to request device information of a device related to the first account, and the request information includes the information about the first account. After receiving the request information, the server may query the device under the first account and a device under another account associated with the first account.

In this embodiment of this application, a device under the another account associated with the first account may be a device that is authorized, by using the another account, to the first account for use. For example, a device that is authorized by a Huawei account of a father to a Huawei account of a daughter for use.

A device under another account associated with the first account may also be a device under another account in a same family group. For example, if the Huawei account of the father, a Huawei account of a mother, and the Huawei account of the daughter are in a same family group, the server may consider by default that devices under all accounts in the same family group trust each other, and the user may use a device of another family member.

S1702. The first electronic device receives the device information sent by the server.

For example, Table 3 shows device information sent by the server to the first electronic device. The device information includes information such as a Huawei account, a device type, whether to support an intelligence capability, a supported function, and online or not.

**Table 3**

| Huawei account | Device type | Supported function | Whether an intelligence capability is supported | Online or not |
|---|---|---|---|---|
| Daughter | Smart screen | Videos, music, and pictures | Yes | Yes |
| | Mobile phone | Video, music, to-do, search, etc. | Yes | Yes |
| Father | Tablet | Video, music, to-do, search, etc. | Yes | Yes |
| | Smart sound box | Music and message leaving | Yes | Yes |
| Mother | In-vehicle infotainment | Navigation and music | Yes | No |
| | Smart headset | Music | No | Yes |
| ... | ... | ... | ... | ... |

S1703: The first electronic device screens out, based on the device information, a device that has an intelligence capability.

For example, as shown in Table 3, the first electronic device may screen devices based on whether the devices support an intelligence capability, to determine devices (a smart screen, a mobile phone, a tablet, a smart sound box, and an in-vehicle infotainment) that have an intelligence capability.

S1704. The first electronic device screens out an online device from the devices that have an intelligence capability.

For example, the first electronic device may screen out online devices from devices that have an intelligence capability, where the online devices that have an intelligence capability include the smart screen, the mobile phone, the tablet, and the smart sound box.

S1705. The first electronic device displays a list, where the list includes information about the devices obtained through screening in S1704.

For example, as shown in FIG. 7(b), the smart screen, the P40, the MatePad Pro, and the smart sound box that are displayed in the list that may be displayed by the mobile phone are devices that have an intelligence capability and that are currently online.

It should be understood that S1701 to S1705 are merely an implementation in which the first electronic device determines devices displayed in the list, and this embodiment of this application is not limited thereto. For example, the first electronic device may store information that is about a device authorized by using an account of another contact and that is obtained from the server. The first electronic device may determine a device that has an intelligence capability in a device under the first account and a device authorized by using an account of another contact. When the first electronic device detects the preset operation of the user, the first electronic device may send request information to these devices that have an intelligence capability by using the server, where the request information is used to determine whether a peer device is online. If the first electronic device receives, by using the server, a response sent by the peer device, the first electronic device may determine that the peer device is online, so as to display, in the list, a device that has an intelligence capability and that is online.

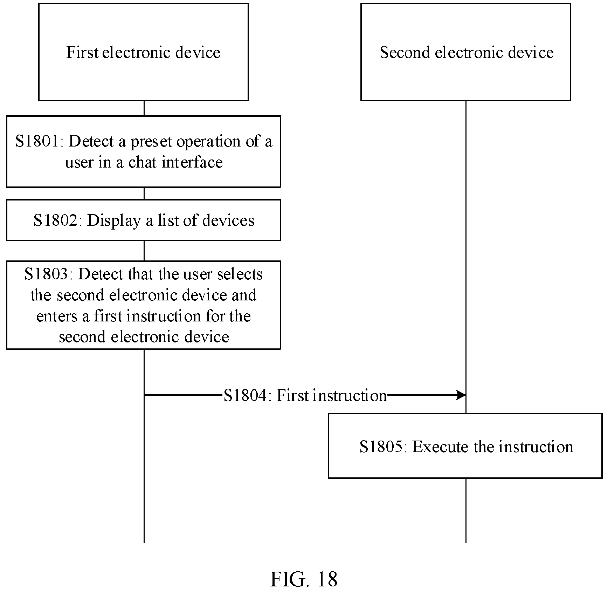

FIG. 18 is a schematic flowchart of a method 1800 for controlling a device according to an embodiment of this application. The method may be executed by a system including a first electronic device and a second electronic device, and the method 1800 includes:

S1801. The first electronic device detects a preset operation of a user in a chat interface of an instant messaging application.

S1802. The first electronic device displays a list in the chat interface in response to the preset operation, where the list includes one or more devices, the one or more devices are associated with a first account, and the first account is a logged-in account on the first electronic device.

S1803: The first electronic device detects an operation that a user selects the second electronic device from the list and enters a first instruction for the second electronic device.

S1804. The first electronic device sends the first instruction to the second electronic device.

It should be understood that for processes of S1801 to S1804, refer to the foregoing processes of S1601 to S1604. For brevity, details are not described herein again.

S1805. The second electronic device executes the first instruction.

For example, if the first instruction includes text information entered by the user, the second electronic device may determine a user intent and slot information in the text information, to execute the instruction.

It should be understood that, for a process in which the second electronic device executes the first instruction, refer to the description in the foregoing embodiments. For brevity, details are not described herein again.

In an embodiment, the method further includes: The second electronic device sends a result of executing the first instruction to the first electronic device; and the first electronic device displays the execution result in the chat interface.

It should be understood that, for a process in which the second electronic device sends the execution result to the first electronic device and the first electronic device displays the execution result in the chat interface, refer to the description in the foregoing method 1600. For brevity, details are not described herein again.

An embodiment of this application provides an electronic device. The electronic device includes one or more processors and one or more memories. The one or more memories store one or more computer programs, and the one or more computer programs include instructions. When the instructions are run by the one or more processors, the first electronic device is enabled to perform the technical solutions in the foregoing embodiments. Implementation principles and technical effects thereof are similar to those of the foregoing method embodiments. Details are not described herein again.

An embodiment of this application provides a computer program product. When the computer program product is run on the first electronic device, the first electronic device is enabled to perform the technical solutions in the foregoing embodiments. Implementation principles and technical effects thereof are similar to those of the foregoing method embodiments. Details are not described herein again.

An embodiment of this application provides a readable storage medium. The readable storage medium includes instructions. When the instructions are on the first electronic device, the first electronic device is enabled to perform the technical solutions in the foregoing embodiments. Implementation principles and technical effects thereof are similar, and details are not described herein again.

An embodiment of this application provides a chip. The chip is configured to execute instructions. When the chip runs, the technical solutions in the foregoing embodiments are executed. Implementation principles and technical effects thereof are similar, and details are not described herein again.

A person of ordinary skill in the art may be aware that the units and algorithm steps in the examples described with reference to the embodiments disclosed in this specification can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

## Claims

1. A system, wherein the system comprises a first electronic device and a second electronic device;
the first electronic device is configured to detect (S1801) a preset operation of a user in a chat interface of an instant messaging application
the first electronic device is further configured to display (S1802) a list in the chat interface in response to the preset operation, wherein the list comprises device information of one or more devices, the one or more devices comprise a device which is associated with a first account, and the first account is a logged-in account of the user on the instant messaging application ;
the first electronic device is further configured to: when detecting an operation that the user selects (S1803) the second electronic device from the list and enters a first instruction for the second electronic device , send (S1804) the first instruction to the second electronic device; and
the second electronic device is configured to execute (S1805) the first instruction;
wherein the one or more devices further comprise a device that has an intelligence capability and that is authorized, by using a second account, to be used by the first account;
wherein before display a list in the chat interface in response to the preset operation, the first electronic device is further configured to obtain the device that has an intelligence capability and that is authorized, by using the second account, to be used by the first account; and
wherein the second account comprises an account of a chat object of the user.

2. The system according to claim 1, wherein the first electronic device is further configured to: when detecting the operation that the user selects the second electronic device from the list, send a second instruction to the second electronic device, wherein the second instruction is used to wake up the second electronic device, or the second instruction is used to request to interact with the second electronic device by using the first electronic device.

3. The system according to any one claim of claims 1-2, wherein the preset operation is an operation of entering "@" by the user.

4. The system according to any one claim of claims 1-3, wherein the chat interface comprises a one-to-one chat interface of two members and a group chat interface of three or more members.

5. The system according to any one of claims 1-4, wherein the list further comprises member information.

6. The system according to claim 4 or 5, wherein the first interface is the group chat interface, and the first electronic device is further configured to : display a first chat interface of the instant messaging application;
display a second chat interface in response to detecting the preset operation in the first chat interface, wherein the second chat interface comprises the list; and
jump from the second chat interface to the first chat interface in response to an operation that the user selects the second electronic device from the list; and
obtaining the first instruction entered by the user in the first chat interface.

7. The system according to any one of claims 1 to 6, wherein the first electronic device is further configured to:
when no instruction entered by the user is received within preset duration, or a third instruction entered by the user is received, send the third instruction to the second electronic device, wherein the third instruction is used to instruct to end interaction with the second electronic device;
receive reminder information sent by the second electronic device, wherein the reminder information is used to remind the user to perform the preset operation again when the user needs to interact with the second electronic device; and
display the reminder information in the chat interface.

8. The system according to any one of claims 1 to 7, wherein the first electronic device is further configured to:
receive a result of executing the first instruction by the second electronic device; and
display the execution result in the chat interface.

## Patentansprüche

1. System, wobei das System eine erste elektronische Vorrichtung und eine zweite elektronische Vorrichtung umfasst;
die erste elektronische Vorrichtung dazu ausgelegt ist, einen voreingestellten Bedienvorgang eines Benutzers in einer Chat-Schnittstelle einer Instant-Messaging-Anwendung zu detektieren (S1801)
die erste elektronische Vorrichtung ferner dazu ausgelegt ist, als Reaktion auf den voreingestellten Bedienvorgang eine Liste in der Chat-Schnittstelle anzuzeigen (S1802), wobei die Liste Vorrichtungsinformationen einer oder mehrerer Vorrichtungen umfasst, die eine oder die mehreren Vorrichtungen eine Vorrichtung umfassen, die mit einem ersten Konto assoziiert ist, und das erste Konto ein angemeldetes Konto des Benutzers in der Instant-Messaging-Anwendung ist;
die erste elektronische Vorrichtung ferner zu Folgendem ausgelegt ist: wenn ein Bedienvorgang detektiert wird, dass der Benutzer die zweite elektronische Vorrichtung aus der Liste auswählt (S1803) und eine erste Anweisung für die zweite elektronische Vorrichtung eingibt, Senden (S1804) der ersten Anweisung an die zweite elektronische Vorrichtung; und
die zweite elektronische Vorrichtung dazu ausgelegt ist, den ersten Befehl auszuführen (S1805);
wobei die eine oder die mehreren Vorrichtungen ferner eine Vorrichtung umfassen, die eine Intelligenzfähigkeit aufweist und die durch Verwenden eines zweiten Kontos dazu autorisiert ist, durch das erste Konto verwendet zu werden;
wobei die erste elektronische Vorrichtung vor dem Anzeigen einer Liste in der Chat-Schnittstelle als Reaktion auf den voreingestellten Bedienvorgang ferner dazu ausgelegt ist, die Vorrichtung zu erhalten, die eine Intelligenzfähigkeit aufweist und die durch Verwenden des zweiten Kontos dazu autorisiert ist, durch das erste Konto verwendet zu werden; und
wobei das zweite Konto ein Konto eines Chat-Objekts des Benutzers umfasst.

2. System nach Anspruch 1, wobei die erste elektronische Vorrichtung ferner zu Folgendem ausgelegt ist: wenn der Bedienvorgang detektiert wird, dass der Benutzer die zweite elektronische Vorrichtung aus der Liste auswählt, Senden einer zweiten Anweisung an die zweite elektronische Vorrichtung, wobei die zweite Anweisung verwendet wird, um die zweite elektronische Vorrichtung aufzuwecken, oder die zweite Anweisung verwendet wird, um eine Interaktion mit der zweiten elektronischen Vorrichtung durch Verwenden der ersten elektronischen Vorrichtung anzufordern.

3. System nach einem der Ansprüche 1-2, wobei der voreingestellte Bedienvorgang ein Bedienvorgang des Eingebens eines "@" durch den Benutzer ist.

4. System nach einem der Ansprüche 1-3, wobei die Chat-Schnittstelle eine Eins-zu-eins-Chat-Schnittstelle von zwei Teilnehmern und eine Gruppenchat-Schnittstelle von drei oder mehr Teilnehmern umfasst.

5. System nach einem der Ansprüche 1-4, wobei die Liste ferner Teilnehmerinformationen umfasst.

6. System nach Anspruch 4 oder 5, wobei die erste Schnittstelle die Gruppenchat-Schnittstelle ist und die erste elektronische Vorrichtung ferner zu Folgendem ausgelegt ist: Anzeigen einer ersten Chat-Schnittstelle der Instant-Messaging-Anwendung;
Anzeigen einer zweiten Chat-Schnittstelle als Reaktion auf das Detektieren des voreingestellten Bedienvorgangs in der ersten Chat-Schnittstelle, wobei die zweite Chat-Schnittstelle die Liste umfasst; und
Wechseln von der zweiten Chat-Schnittstelle zu der ersten Chat-Schnittstelle als Reaktion auf einen Bedienvorgang, dass der Benutzer die zweite elektronische Vorrichtung aus der Liste auswählt; und
Erhalten der durch den Benutzer in der ersten Chat-Schnittstelle eingegebenen ersten Anweisung.

7. System nach einem der Ansprüche 1 bis 6, wobei die erste elektronische Vorrichtung ferner zu Folgendem ausgelegt ist:
wenn keine durch den Benutzer eingegebene Anweisung innerhalb einer voreingestellten Dauer empfangen wird oder eine durch den Benutzer eingegebene dritte Anweisung empfangen wird, Senden der dritten Anweisung an die zweite elektronische Vorrichtung, wobei die dritte Anweisung verwendet wird, um anzuweisen, die Interaktion mit der zweiten elektronischen Vorrichtung zu beenden;
Empfangen von Erinnerungsinformationen, die durch die zweite elektronische Vorrichtung gesendet werden, wobei die Erinnerungsinformationen verwendet werden, um den Benutzer daran zu erinnern, den voreingestellten Bedienvorgang erneut durchzuführen, wenn der Benutzer mit der zweiten elektronischen Vorrichtung interagieren muss; und
Anzeigen der Erinnerungsinformationen in der Chat-Schnittstelle.

8. System nach einem der Ansprüche 1 bis 7, wobei die erste elektronische Vorrichtung ferner zu Folgendem ausgelegt ist:
Empfangen eines Ergebnisses des Ausführens des ersten Befehls durch die zweite elektronische Vorrichtung; und
Anzeigen des Ausführungsergebnisses in der Chat-Schnittstelle.

## Revendications

1. Système, le système comprenant un premier dispositif électronique et un deuxième dispositif électronique ;
le premier dispositif électronique étant configuré pour détecter (S1801) une opération prédéfinie d'un utilisateur dans une interface de dialogue instantané d'une application de messagerie instantanée
le premier dispositif électronique étant en outre configuré pour afficher (S1802) une liste dans l'interface de dialogue instantané en réponse à l'opération prédéfinie, la liste comprenant des informations de dispositif d'un ou plusieurs dispositifs, les un ou plusieurs dispositifs comprenant un dispositif qui est associé à un premier compte, et le premier compte étant un compte connecté de l'utilisateur sur l'application de messagerie instantanée ;
le premier dispositif électronique étant en outre configuré pour : lors de la détection d'une opération par laquelle l'utilisateur sélectionne (S1803) le deuxième dispositif électronique dans la liste et entre une première instruction pour le deuxième dispositif électronique, envoyer (S1804) la première instruction au deuxième dispositif électronique ; et
le deuxième dispositif électronique étant configuré pour exécuter (S1805) la première instruction ;
où les un ou plusieurs dispositifs comprennent en outre un dispositif ayant une capacité d'intelligence et qui est autorisé, en utilisant un deuxième compte, à être utilisé par le premier compte ;
où, avant d'afficher une liste dans l'interface de dialogue instantané en réponse à l'opération prédéfinie, le premier dispositif électronique est en outre configuré pour obtenir le dispositif qui a une capacité d'intelligence et qui est autorisé, en utilisant le deuxième compte, à être utilisé par le premier compte ; et
où le deuxième compte comprend un compte d'un objet de dialogue instantané de l'utilisateur.

2. Système selon la revendication 1, dans lequel le premier dispositif électronique est en outre configuré pour : lors de la détection de l'opération par laquelle l'utilisateur sélectionne le deuxième dispositif électronique dans la liste, envoyer une deuxième instruction au deuxième dispositif électronique, où la deuxième instruction est utilisée pour réveiller le deuxième dispositif électronique, ou la deuxième instruction est utilisée pour demander à interagir avec le deuxième dispositif électronique en utilisant le premier dispositif électronique.

3. Système selon l'une quelconque des revendications 1 et 2, dans lequel l'opération prédéfinie est une opération comprenant d'entrer « @ » par l'utilisateur.

4. Système selon l'une quelconque des revendications 1 à 3, dans lequel l'interface de dialogue instantané comprend une interface de dialogue instantané d'une personne à une personne, de deux membres, et une interface de dialogue instantané de groupe de trois membres, ou plus.

5. Système selon l'une quelconque des revendications 1 à 4, dans lequel la liste comprend en outre des informations de membre.

6. Système selon la revendication 4 ou la revendication 5, dans lequel la première interface est l'interface de dialogue instantané de groupe, et le premier dispositif électronique est en outre configuré pour : afficher une première interface de dialogue instantané de l'application de messagerie instantanée ;
afficher une deuxième interface de dialogue instantané en réponse à la détection de l'opération prédéfinie dans la première interface de dialogue instantané, la deuxième interface de dialogue instantané comprenant la liste ; et
sauter de la deuxième interface de dialogue instantané à la première interface de dialogue instantané en réponse à une opération par laquelle l'utilisateur sélectionne le deuxième dispositif électronique dans la liste ; et
obtenir la première instruction entrée par l'utilisateur dans la première interface de dialogue instantané.

7. Système selon l'une quelconque des revendications 1 à 6, dans lequel le premier dispositif électronique est en outre configuré pour :
lorsqu'aucune instruction entrée par l'utilisateur n'est reçue pendant une durée prédéterminée, ou qu'une troisième instruction entrée par l'utilisateur est reçue, envoyer la troisième instruction au deuxième dispositif électronique, la troisième instruction étant utilisée pour donner pour instruction de terminer l'interaction avec le deuxième dispositif électronique ;
recevoir des informations de rappel envoyées par le deuxième dispositif électronique, les informations de rappel étant utilisées pour rappeler à l'utilisateur d'effectuer à nouveau l'opération prédéfinie lorsque l'utilisateur doit interagir avec le deuxième dispositif électronique ; et
afficher les informations de rappel dans l'interface de dialogue instantané.

8. Système selon l'une quelconque des revendications 1 à 7, dans lequel le premier dispositif électronique est en outre configuré pour :
recevoir un résultat de l'exécution de la première instruction par le deuxième dispositif électronique ; et
afficher le résultat de l'exécution dans l'interface de dialogue instantané.
